(19) Europäisches Patentamt
European Patent Office
Office européen des brevets

(11) **EP 4 282 888 A1**

(12) **EUROPEAN PATENT APPLICATION**
published in accordance with Art. 153(4) EPC

(43) Date of publication:
**29.11.2023 Bulletin 2023/48**

(21) Application number: **22742633.5**

(22) Date of filing: **20.01.2022**

(51) International Patent Classification (IPC):
*C08F 210/14* (2006.01)       *C08L 23/16* (2006.01)
*C08L 23/20* (2006.01)       *C08L 53/02* (2006.01)
*C08K 3/013* (2018.01)       *C08K 3/22* (2006.01)
*C08K 3/26* (2006.01)       *C08K 3/30* (2006.01)
*C08K 3/34* (2006.01)

(52) Cooperative Patent Classification (CPC):
**C08F 210/14; C08K 3/013; C08K 3/22; C08K 3/26;
C08K 3/30; C08K 3/34; C08L 23/16; C08L 23/20;
C08L 53/02**

(86) International application number:
**PCT/JP2022/001920**

(87) International publication number:
**WO 2022/158511 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.01.2021 JP 2021009498**

(71) Applicant: **Mitsui Chemicals, Inc.**
**Tokyo 104-0028 (JP)**

(72) Inventors:
• **FUKAGAWA Yoshisada**
**Sodegaura-shi, Chiba 299-0265 (JP)**
• **UEKUSA Takayuki**
**Sodegaura-shi, Chiba 299-0265 (JP)**
• **YASUI Motoyasu**
**Sodegaura-shi, Chiba 299-0265 (JP)**

(74) Representative: **Hoffmann Eitle**
**Patent- und Rechtsanwälte PartmbB
Arabellastraße 30
81925 München (DE)**

(54) **RESIN COMPOSITION AND MOLDED BODY**

(57)    An object of the present invention is to provide a resin composition including a thermoplastic resin and an inorganic filler, which can easily undergo molding processing and has flexibility and a sense of massiveness, and a molded article thereof. A resin composition, including 15 to 50 parts by mass of a specific 4-methyl-1-pentene/$\alpha$-olefin copolymer (A), 10 to 50 parts by mass of an inorganic filler (B), and 5 to 49 parts by mass of a thermoplastic elastomer (C) (a total amount of 4-methyl-1-pentene/$\alpha$-olefin copolymer (A), inorganic filler (B), and thermoplastic elastomer (C) is 100 parts by mass), wherein the thermoplastic elastomer (C) is at least one selected from the group consisting of an olefinic thermoplastic elastomer (C1) and a styrenic thermoplastic elastomer (C2); and a molded article including the resin composition.

**Description**

Technical Field

The present invention relates to a resin composition and a molded article, and more specifically relates to a resin composition and a molded article, comprising a thermoplastic resin and an inorganic filler, and applications thereof.

Background Art

Conventionally polyolefins have been widely used for daily necessities, among thermoplastic resins. They can be mass-produced by injection molding and the like, have a light specific gravity as well as an excellent mechanical strength, and have various other characteristics such as glossiness, colorability, chemical resistance, and recyclability. However, molded articles with a thin wall apt to be damaged against impact loads. For example, a rib structure disposed as a form of molded article demonstrates a buffer effect of impact loads, enabling prevention of damages, however, in the case of a form being difficult to dispose the rib structure, a molded article filled with inorganic fillers may be used to contemplate to improve an impact strength.

Conventionally, polyolefins have been widely used in toys as well. Even for toys with a thin wall, molded materials filled with inorganic fillers are used to improve impact resistance, as is the case with daily necessities. Such molded materials tend to be hard, and young children, for example, who have many opportunities to handle toys, may become bored of playing with the molded article due to lack of shape variations thereof with hard touch.

Styrenic thermoplastic elastomers, on the other hand, are used in daily necessities and toys because of their elasticity similar to that of rubber materials. For example, a styrene·ethylene·butylene·styrene copolymer (styrene·ethylene·butene·styrene block copolymer) (SEBS) has constituent units in which a hard polystyrene moiety (hard segment) and a soft polybutylene moiety (soft segment) are copolymerized in block form. Since the end block of polystyrene forms a structure (domain) cohered with each other, their polystyrene domain is known to act as a pseudo-crosslinking point, thereby exhibiting elasticity similar to that of rubber materials. However, it is also a resin having strong self-adhesion (tackiness), for example, which causes a molded article to stick to a mold upon injection molding, resulting in poor mass production. In order to inhibit the self-adhesion, molded materials in which crystalline polyolefin are compounded or inorganic fillers are filled, are used. However, these molded materials can maintain no flexibility, which tended to result in rigid molded articles.

Patent Document 1 discloses a synthetic paper comprising a resin composition containing inorganic mineral powder and polyethylene.

Furthermore, Patent Documents 2 and 3 disclose sheet molded articles comprising a resin composition containing specific inorganic fillers and polyolefins. Among them, Patent Document 2 discloses a resin composition containing equal amounts of polypropylene resin and calcium carbonate and a sheet comprising the resin composition. Here, Patent Document 2 also discloses that a polyethylene resin can be used instead of a polypropylene resin. Patent Document 3 also discloses a resin composition containing crystalline polymers such as a polypropylene resin and a polyethylene resin and inorganic fine powder, and a sheet comprising the resin composition. Here, Patent Document 3 specifically discloses a resin composition containing a propylene homopolymer, calcium carbonate, and a small amount of magnesium stearate, as an example of such a resin composition.

Citation List

Patent Documents

    [Patent Document 1] JP2001-071378A
    [Patent Document 2] JP2003-026866A
    [Patent Document 3] WO2018/092494

Summary of Invention

Technical Problem

Indexes used to evaluate viscoelasticity of materials such as elastomers upon being deformed include a coefficient of loss. The coefficient of loss is expressed as a ratio of a loss modulus (G") to a storage modulus (G') (G"/G') and is known as $\tan\delta$. A material with a large $\tan\delta$ tends to have softer touch when being formed into molded articles.

The resin composition of Patent Document 1 can be utilized as synthetic papers, which have excellent foldability and tearing properties. However, they exhibit no high tanδ peak values and are materials with poor flexibility.

Patent Documents 2 and 3 propose that their resin compositions can exhibit favorable molding processability while containing a large amount of inorganic fillers. They are presumed to have eliminated stickiness on a surface of a molded article. However, since they contain large amounts of inorganic fillers, the resulting molded article of which is hard. Therefore, they tend to lose flexibility, and are difficult to exhibit a high tanδ peak value in the first place.

Thus, an object of the present invention is to provide a resin composition comprising a thermoplastic resin and an inorganic filler, which can easily undergo molding processing and has flexibility and a sense of massiveness, and a molded article thereof.

Solution to Problem

The present inventors have found, as result of diligent investigations in order to solve the aforementioned problems, that the problems can be solved by using a resin composition comprising a 4-methyl-1-pentene/α-olefin copolymer (A), an inorganic filler (B), and a specific thermoplastic elastomer (C) in a specific compounding ratio, and thus have completed the present invention.

That is, the present invention relates, for example, to the following items [1] to [9].

[1] A resin composition, comprising

15 to 50 parts by mass of a 4-methyl-1-pentene/α-olefin copolymer (A) satisfying at least one of the following requirement (d) and requirement (e),
10 to 50 parts by mass of an inorganic filler (B), and
5 to 49 parts by mass of a thermoplastic elastomer (C),
wherein a total amount of 4-methyl-1-pentene/α-olefin copolymer (A), inorganic filler (B), and thermoplastic elastomer (C) is 100 parts by mass,
wherein the thermoplastic elastomer (C) is at least one selected from the group consisting of an olefinic thermoplastic elastomer (C1) and a styrenic thermoplastic elastomer (C2), and
wherein the resin composition satisfies the following requirements (a) to (c):

(a) having a temperature at which a value of loss tangent tanδ as determined by dynamic viscoelasticity measurement at a frequency of 10 rad/s (1.6 Hz) in a temperature range of -40 to 150°C reaches the maximum (hereinafter also referred to as a tanδ peak temperature) being 0°C or more and 60°C or less;
(b) having a maximum value of loss tangent tanδ (hereinafter also referred to as a tanδ peak value) as determined by dynamic viscoelasticity measurement at a frequency of 10 rad/s (1.6 Hz) in a temperature range of -40 to 150°C being 0.6 or more and 5.0 or less;
(c) having a density of 1.0 g/cm$^3$ or more and 5.0 g/cm$^3$ or less;
(d) comprising 55 to 90 mol% of a constituent unit derived from 4-methyl-1-pentene and 10 to 45 mol% of a constituent unit derived from α-olefin having 2 to 4 carbon atoms, wherein a total of the constituent unit derived from 4-methyl-1-pentene and the constituent unit derived from α-olefin having 2 to 4 carbon atoms is 100 mol%; and
(e) having a melting point as measured by a differential scanning calorimeter (DSC) being 160°C or less, or having no observed melting point.

[2] The resin composition according to [1], wherein the 4-methyl-1-pentene/α-olefin copolymer (A) satisfies the following requirements (f) and (g):

(f) having a tanδ peak temperature of 15°C or more and 45°C or less, as determined by dynamic viscoelasticity measurement with a frequency of 10 rad/s (1.6 Hz) in a temperature range of -40 to 150°C; and
(g) having a tanδ peak value of 0.6 or more and 5.0 or less, as determined by dynamic viscoelasticity measurement at a frequency of 10 rad/s (1.6 Hz) in a temperature range of - 40 to 150°C.

[3] The resin composition according to [1] or [2], wherein the inorganic filler (B) is one or more selected from the group consisting of calcium carbonate, magnesium sulfate, barium sulfate, magnesium oxide, and talc.

[4] The resin composition according to any one of [1] to [3], wherein an average particle size of the inorganic filler (B) is from 0.01 to 100 μm.

[5] A molded article comprising the resin composition according to any one of [1] to [4].

[6] Daily necessities comprising the resin composition according to any one of [1] to [4].

[7] A toy comprising the resin composition according to any one of [1] to [4].

[8] An earpiece component comprising the resin composition according to any one of [1] to [4].

[9] A sheet comprising the resin composition according to any one of [1] to [4].

Advantageous Effects of Invention

According to the present invention, it is possible to provide a resin composition, which can easily undergo molding processing and has flexibility and a sense of massiveness because it exhibits a high $\tan\delta$ peak value, and a molded article thereof.

The molded article comprising the resin composition of the present invention can provide daily necessities, toys, components of wearable devices such as earpiece components, for example, which have high stress relaxation and shape retention allowing the molded article to slowly recover the original shape after having been elastically deformed, flexibility and a sense of massiveness. Therefore, molded articles obtained in the present invention are suitable, for example, as toys, daily necessities, and earpiece components.

Description of Embodiments

Specific embodiments of the present invention will be described in detail below, however, the present invention is in no way limited to the embodiments below, and may be implemented with variations as appropriate within the scope of the purpose of the invention. Incidentally, the terms "polymer" and "(co)polymer" herein are used in the meaning that encompasses a homopolymer and a copolymer, unless otherwise specified.

<Resin composition>

The resin composition of the present invention comprises a 4-methyl-1-pentene/$\alpha$-olefin copolymer (A), an inorganic filler (B), and a thermoplastic elastomer (C).

Specifically the resin composition comprises 15 to 50 parts by mass of the 4-methyl-1-pentene/$\alpha$-olefin copolymer (A), 10 to 50 parts by mass of the inorganic filler (B), and 5 to 49 parts by mass of the thermoplastic elastomer (C). Here, the total amount of the 4-methyl-1-pentene/$\alpha$-olefin copolymer (A), inorganic filler (B), and thermoplastic elastomer (C) is 100 parts by mass. Here, in the present invention, the thermoplastic elastomer (C) is at least one selected from the group consisting of an olefinic thermoplastic elastomer (C1) and a styrenic thermoplastic elastomer (C2).

In a typical and suitable aspect in the present invention, the resin composition of the present invention contains only either of the olefinic thermoplastic elastomer (C1) and the styrenic thermoplastic elastomer (C2) as the thermoplastic elastomer (C). In this aspect, either one of the amount of olefinic thermoplastic elastomer (C1) and the amount of styrenic thermoplastic elastomer (C2) is 0 parts by mass.

In the case of a resin composition free of the styrenic thermoplastic elastomer (C2), the aforementioned 100 parts by mass is based on a total amount of 4-methyl-1-pentene/$\alpha$-olefin copolymer (A), inorganic filler (B) and olefinic thermoplastic elastomer (C1). In other words, such a resin composition contains

15 to 50 parts by mass of the 4-methyl-1-pentene-$\alpha$-olefin copolymer (A),

10 to 50 parts by mass of the inorganic filler (B), and

5 to 49 parts by mass of the olefinic thermoplastic elastomer (C1),

but it is free of the styrenic thermoplastic elastomer (C2), in the total amount of 4-methyl-1-pentene/$\alpha$-olefin copolymer (A), inorganic filler (B), and olefinic thermoplastic elastomer (C1) as 100 parts by mass.

Moreover, in the case of a resin composition free of the olefinic thermoplastic elastomer (C1), the aforementioned 100 parts by mass is based on a total amount of 4-methyl-1-pentene/$\alpha$-olefin copolymer (A), inorganic filler (B) and styrenic thermoplastic elastomer (C2). In other words, such a resin composition contains

15 to 50 parts by mass of the 4-methyl-1-pentene-$\alpha$-olefin copolymer (A),

10 to 50 parts by mass of the inorganic filler (B), and

5 to 49 parts by mass of the styrenic thermoplastic elastomer (C2),

but it is free of the olefinic thermoplastic elastomer (C1), in the total amount of 4-methyl-1-pentene/$\alpha$-olefin copolymer (A), inorganic filler (B), and styrenic thermoplastic elastomer (C2) as 100 parts by mass.

The resin composition of the present invention satisfies all of the following requirements (a) to (c).

Requirement (a)

The resin composition of the present invention has a temperature at which a value of loss tangent tan$\delta$ as determined by dynamic viscoelasticity measurement at a frequency of 10 rad/s (1.6 Hz) in a temperature range of -40 to 150°C reaches the maximum (hereinafter also referred to as a tan$\delta$ peak temperature) being 0°C or more and 60°C or less. Here, with regard to the lower limit value of the tan$\delta$ peak temperature, the tan$\delta$ peak temperature is preferably 2°C or more and more preferably 4°C or more. With regard to the upper limit value of the tan$\delta$ peak temperature, the tan$\delta$ peak temperature is preferably 55°C or less, more preferably 50°C or less, and particularly preferably 45°C or less. Adjusting the tan$\delta$ peak temperature within the above temperature range allows a molded article to exhibit high stress relaxation with respect to a wide range of environmental temperatures.

Requirement (b)

The resin composition of the present invention has a maximum value of loss tangent tan$\delta$ (hereinafter also referred to as a "tan$\delta$ peak value") as determined by dynamic viscoelasticity measurement at a frequency of 10 rad/s (1.6 Hz) in a temperature range of -40 to 150°C being 0.6 or more and 5.0 or less. This tan$\delta$ peak value is preferably 0.6 or more and 4.5 or less, more preferably 0.6 or more and 4.0 or less, and particularly preferably 0.6 or more and 3.5 or less. Adjusting the tan$\delta$ peak value within the above range results in the obtained molded article with excellent stress relaxation, allowing the molded article to slowly recover the original shape after having been elastically deformed.

The loss tangent tan$\delta$ can be calculated by a ratio of a loss modulus (G") to a storage modulus (G') (G"/G'), as measured by dynamic viscoelasticity.

In the present invention, the loss tangent tan$\delta$ is determined by dynamic viscoelasticity measurement at a frequency of 10 rad/s (1.6 Hz) in a temperature range of -40 to 150°C, and a temperature at which the loss tangent tan$\delta$ reaches the maximum in this temperature range is defined as the aforementioned tan$\delta$ peak temperature, and the value of the loss tangent tan $\delta$ thereupon is defined as a tan$\delta$ peak value. The aforementioned tan$\delta$ peak temperature is considered to be due to a glass transition temperature of the resin composition. Details of a measurement method of them are as will be described in the Examples below.

Requirement (c)

The resin composition of the present invention has a density of 1.0 g/cm$^3$ or more and 5.0 g/cm$^3$ or less. With regard to the lower limit value of the density of the resin composition described above, the density is preferably 1.05 g/cm$^3$ or more and more preferably 1.1 g/cm$^3$ or more. With regard to the upper limit value of the density of the aforementioned resin composition, the density is preferably 4.0 g/cm$^3$ or less and more preferably 3.5 g/cm$^3$ or less. The density of the resin composition being within the above range renders a molded article a sense of massiveness when formed into a molded article, which is preferred. For example, the molded article used as daily necessities can be expected to be given installation stability when placed on a desk, a table, or the like. Details of a measurement method of the density are as will be described in the Examples below.

Furthermore, when the resin composition of the present invention is formed into a sheet molded article, a lower limit value of Shore A hardness (in accordance with ASTM D2244, measured with three sheets of molded articles with a thickness of 2 mm thick, stacked on top of each other) at 15 seconds after the start of contact of a pushing needle is preferably 10, more preferably 20, and further preferably 30. An upper limit value of Shore A hardness at 15 seconds after the start of contact of the pushing needle, on the other hand, is preferably 95, more preferably 92, and further preferably 88. A method of fabricating molded articles is as shown in the Examples.

When the resin composition of the present invention is formed into a sheet molded article, a lower limit value of a change $\Delta$HS in values of Shore A hardness (in accordance with ASTM D2244, measured with three sheets of molded articles with a thickness of 2 mm, stacked on top of each other), $\Delta$HS being defined by the following formula, is preferably 5, more preferably 10, and further preferably 15. An upper limit value of $\Delta$HS is, on the other hand, preferably 60, more preferably 50, and further preferably 40.

```
ΔHS = (Shore A hardness value immediately after the

start of contact of pushing needle - Shore A hardness value

15 seconds after the start of the contact of pushing needle)
```

ΔHS can be arbitrarily changed by the 4-methyl-1-pentene/α-olefin copolymer (A), inorganic filler (B), and thermoplastic elastomer (C), which constitute a resin composition, and the ΔHS within the aforementioned range renders excellent flexibility.

In the case measuring the Shore A hardness is difficult, the same evaluation can be performed using a Shore D hardness value instead. In this case, instead of the above ΔHS, evaluation can be made by a change ΔHS' in values of Shore D hardness (in accordance with ASTM D2244, measured with three sheets of molded articles with a thickness of 2 mm, stacked on top of each other), ΔHS' being defined by the following formula.

$$\Delta HS' = (Shore\ D\ hardness\ value\ immediately\ after\ the$$

$$start\ of\ contact\ of\ pushing\ needle\ -\ Shore\ D\ hardness\ value$$

$$15\ seconds\ after\ the\ start\ of\ the\ contact\ of\ pushing\ needle)$$

In this case, a lower limit value of ΔHS' is preferably 5, more preferably 8 and further preferably 11. An upper limit value of ΔHS' is, on the contrary, preferably 60, more preferably 50, and further preferably 40. This ΔHS' can also be arbitrarily changed by the 4-methyl-1-pentene/α-olefin copolymer (A), inorganic filler (B), and thermoplastic elastomer (C), as is the case with the aforementioned ΔHS, and the ΔHS' within the above range renders excellent flexibility.

<4-Methyl-1-pentene/α-olefin copolymer (A)>

The 4-methyl-1-pentene/α-olefin copolymer (A) contained in the resin composition of the present invention is not limited, but preferably satisfies one or more of the following requirements (d) to (g), more preferably two or more thereof, further preferably three or more thereof, and particularly preferably all thereof. In a typical aspect of the present invention, the 4-methyl-1-pentene/α-olefin copolymer (A) satisfies at least one of requirements (d) and (e). That is, the 4-methyl-1-pentene/α-olefin copolymer (A) may satisfy requirement (d) singly, may satisfy requirement (e) singly, or may satisfy both requirement (d) and requirement (e). In this aspect, the 4-methyl-1-pentene/α-olefin copolymer (A) satisfies, in addition to requirement (d) and/or requirement (e), preferably either one of requirement (f) and requirement (g), and particularly preferably further both requirement (f) and requirement (g).

Requirement (d)

Comprising 55 to 90 mol% of a constituent unit derived from 4-methyl-1-pentene (hereinafter may be referred to as a "constituent unit (i)") and 10 to 45 mol% of a constituent unit derived from α-olefin having 2 to 4 carbon atoms (hereinafter may be referred to as a "constituent unit (ii)") (a total amount of the constituent unit (i) and the constituent unit (ii) is 100 mol%).

Requirement (e)

Having a melting point as measured by a differential scanning calorimeter (DSC) being 160°C or less, or having no observed melting point.

Requirement (f)

Having a tanδ peak temperature of 15°C or more and 45°C or less, as determined by dynamic viscoelasticity measurement with a frequency of 10 rad/s (1.6 Hz) in a temperature range of -40 to 150°C.

Requirement (g)

Having a tanδ peak value of 0.6 or more and 5.0 or less, as determined by dynamic viscoelasticity measurement at a frequency of 10 rad/s (1.6 Hz) in a temperature range of -40 to 150°C.

The requirement (d) above specifies that the 4-methyl-1-pentene/α-olefin copolymer (A) has a specific ratio of the constituent unit (i) derived from 4-methyl-1 pentene and the constituent unit (ii) derived from α-olefin having 2 to 4 carbon atoms.

In the present specification, the constituent unit derived from α-olefin indicates a constituent unit corresponding to α-olefin, i.e., a constituent unit represented by -$CH_2$-CHR-(R is a hydrogen atom or an alkyl group). The constituent unit (i) derived from 4-methyl-1-pentene can be interpreted in the same manner, and indicates a constituent unit corresponding to 4-methyl-1-pentene (i.e., a constituent unit represented by -CH$_2$-CH(-CH$_2$CH(CH$_3$)$_2$)-).

A lower limit value of the amount of constituent unit derived from 4-methyl-1-pentene in the aforementioned 4-methyl-1-pentene/$\alpha$-olefin copolymer (A) is 55 mol%. The amount of constituent unit is preferably 60 mol% and more preferably 68 mol%. An upper limit value of the amount of constituent unit derived from 4-methyl-1-pentene is, on the other hand, 90 mol%, preferably 86 mol%, more preferably 85 mol%, and further preferably 84 mol%.

In the 4-methyl-1-pentene/$\alpha$-olefin copolymer (A), the amount of constituent unit (i) derived from 4-methyl-1-pentene being in an amount of the lower limit value or more described above, also facilitates adjustment of a tan$\delta$ peak temperature of a resin composition within the aforementioned range, because the tan$\delta$ peak temperature measured by dynamic viscoelasticity falls in the vicinity of room temperature. The amount of constituent unit (i) derived from 4-methyl-1-pentene being within the upper limit value or less described above, on the other hand, improves relaxation at room temperature and fits as a molded article.

Therefore, in the 4-methyl-1-pentene/$\alpha$-olefin copolymer (A), an upper limit of the amount of constituent unit (ii) derived from an $\alpha$-olefin having 2 to 4 carbon atoms is 45 mol%. The amount of this constituent unit is preferably 40 mol% and more preferably 32 mol%.

A lower limit value of the amount of constituent unit (ii) derived from an $\alpha$-olefin having 2 to 4 carbon atoms is 10 mol%, preferably 14 mol%, more preferably 15 mol%, and further preferably 16 mol%.

A value of the content percentage (mol%) of each constituent unit constituting the 4-methyl-1-pentene/$\alpha$-olefin copolymer (A) is measured by $^{13}$C-NMR. Details of a measurement method of the content percentage are as will be described in the Examples below.

Thus, the 4-methyl-1-pentene/$\alpha$-olefin copolymer (A) used in the present invention comprises $\alpha$-olefin having 2 to 4 carbon atoms as $\alpha$-olefin. The resin composition of the present invention containing such 4-methyl-1-pentene/$\alpha$-olefin copolymer (A) has lower crystallinity and renders a flexible composition, compared to a resin composition containing a 4-methyl-1-pentene/$\alpha$-olefin copolymer comprising 4-methyl-1-pentene and an $\alpha$-olefin having more carbon atoms. Specific examples of the $\alpha$-olefin having 2 to 4 carbon atoms include ethylene, propylene, 1-butene, with propylene being particularly preferred among them. The constituent unit (ii) may be derived from one of these compounds, or from two or more thereof.

Selecting propylene as the $\alpha$-olefin having 2 to 4 carbon atoms allows uniform and favorable kneadability with the inorganic filler (B) and the thermoplastic elastomer (C) to be obtained, and a molded article comprising the resulting resin composition thereof has a likelihood of obtaining a molded article with flexibility. Details of the inorganic filler (B) and thermoplastic elastomer (C) used in the present invention will be described below in the sections "Inorganic Filler (B)" and "Thermoplastic elastomer (C)", respectively.

In a typical aspect of the present invention, the 4-methyl-1-pentene/$\alpha$-olefin copolymer (A) constituting the resin composition of the present invention consists of the component unit (i) and the component unit (ii). Namely, the 4-methyl-1-pentene/$\alpha$-olefin copolymer (A) is a copolymer of 4-methyl-1-pentene and an $\alpha$-olefin having 2 to 4 carbon atoms, in this aspect.

With respect to the requirement (e) above, the 4-methyl-1-pentene/$\alpha$-olefin copolymer (A) has a melting point of 160°C or less as measured by a differential scanning calorimeter (DSC), or has no observed melting point, preferably has a melting point of 140°C or less or no observed melting point, and further preferably has no observed melting point.

Satisfying such a requirement enables the resin composition of the present invention to obtain favorable kneadability with the inorganic filler (B) and the thermoplastic elastomer (C) and to improve stress relaxation.

With respect to the requirement (f) above, the aforementioned 4-methyl-1-pentene/$\alpha$-olefin copolymer (A) has a tan$\delta$ peak temperature of 15°C or more and 45°C or less, as determined by dynamic viscoelasticity measurement at a frequency of 10 rad/s (1.6 Hz) in a temperature range of -40 to 150°C, and it preferably has a tan$\delta$ peak temperature of 20°C or more and 45°C or less and more preferably 25°C or more and 45°C or less.

Setting the tan$\delta$ peak temperature within the above range allows the stress relaxation properties to be more demonstrated in the vicinity of room temperature.

With respect to the requirement (g) above, the 4-methyl-1-pentene/$\alpha$-olefin copolymer (A) has a tan$\delta$ peak value of 0.6 or more and 5.0 or less, as determined by dynamic viscoelasticity measurement at a frequency of 10 rad/s (1.6 Hz) in a temperature range of -40 to 150°C, and it preferably has a tan$\delta$ peak value of 1.0 or more and 5.0 or less, more preferably 1.5 or more and 5.0 or less, and further preferably 2.0 or more and 4.0 or less.

Setting the tan$\delta$ peak value within the above range renders excellent recoverability that allows a shape to gently return to its original shape in response to a tensile stress and a speed at which it is deformed.

The 4-methyl-1-pentene/$\alpha$-olefin copolymer (A) preferably has an intrinsic viscosity [$\eta$] in the range of 0.1 to 5.0 dl/g, measured at 135°C in decalin. It is more preferably 0.5 to 4.0 dl/g and further preferably 1.0 to 3.5 dl/g. As will be described below, combination with hydrogen during polymerization enables control of a molecular weight, making it possible to freely obtain molecular weights in ranges from a low molecular weight to a high molecular weight and adjustment of the intrinsic viscosity [$\eta$] in the above range. Details of a measurement method of the intrinsic viscosity [η] are as will be described in the Examples below.

The 4-methyl-1-pentene/α-olefin copolymer (A) preferably has a weight-average molecular weight (Mw) measured by gel permeation chromatography (GPC) of 1,000 to 1,000,000 or less in terms of polystyrenes, more preferably of 5,000 to 800,000 or less, and further preferably of 10,000 to 500,000 or less. Details of the measurement method are as will be described in the Examples below.

The 4-methyl-1-pentene/α-olefin copolymer (A) preferably has a molecular weight distribution (Mw/Mn) of in the range of 1.0 to 3.5, which is a ratio of a weight-average molecular weight (Mw) to a number-average molecular weight (Mn), as measured by gel permeation chromatography (GPC). It is more preferably 1.2 to 3.0 and further preferably 1.5 to 2.8 or less. The molecular weight distribution (Mw/Mn) being 3.5 or less lowers influences of low molecular weight and low stereoregular polymers derived from their composition distribution, and is unlikely to reduce a mechanical strength of the resulting molded article, which is preferred.

The 4-methyl-1-pentene/α-olefin copolymer (A) has a melt mass flow rate (MFR; in accordance with ASTM D1238, temperature 230°C, load 2.16 kg) of preferably 0.1 to 100 g/10 minutes, more preferably 0.5 to 50 g/10 minutes, and further preferably within the range of 1.0 to 30 g/10 minutes.

The melt mass flow rate (MFR) of the 4-methyl-1-pentene/α-olefin copolymer (A) being the lower limit value or more within the above range renders favorable dispersibility with the inorganic filler (B) and the thermoplastic elastomer (C) .

The melt mass flow rate (MFR) of the 4-methyl-1-pentene/α-olefin copolymer (A) being the upper limit value or less within the above range allows a molecular weight of the resin not to be too low and renders a sufficient mechanical strength as a molded article, which is preferred.

The 4-methyl-1-pentene/α-olefin copolymer (A) has a density of preferably 830 to 870 kg/m3, more preferably 830 to 860 kg/m3, and further preferably 830 to 850 kg/m$^3$. Incidentally, details of the measurement method of the density are as will be described in the Examples below. The density of the 4-methyl-1-pentene/α-olefin copolymer (A) can be appropriately changed depending on a comonomer composition ratio of the 4-methyl-1-pentene/α-olefin copolymer. The 4-methyl-1-pentene/α-olefin copolymer (A) having the density of within the above range provides favorable kneadability with the inorganic filler (B), and also provides uniform and favorable dispersibility for the thermoplastic elastomer (C), i.e., for both the olefinic thermoplastic elastomer (C1) and the styrenic thermoplastic elastomer (C2), which is advantageous.

The amount of 4-methyl-1-pentene/α-olefin copolymer (A) added in the resin composition of the present invention is 15 to 50 parts by mass relative to 100 parts by mass of the total amount of the 4-methyl-1-pentene/α-olefin copolymer (A), inorganic filler (B), and thermoplastic elastomer (C). The amount thereof added is preferably a certain amount or more from the point that a molded article comprising the resin composition can exhibit a high tanδ peak value and it is more preferably 20 parts by mass or more. The amount thereof added is, on the other hand, preferably a certain amount or less from the point that a molded article comprising the resin composition can provide a sense of massiveness, and it is more preferably 50 parts by mass or less.

<Production method of 4-methyl-1-pentene/α-olefin copolymer (A)>

Methods for producing the aforementioned 4-methyl-1-pentene/α-olefin copolymer (A) are not particularly limited, and the aforementioned 4-methyl-1-pentene/α-olefin copolymer (A) can be produced by, for example, polymerizing 4-methyl-1-pentene and the aforementioned α-olefin having 2 to 4 carbon atoms in the presence of an appropriate polymerization catalyst such as a magnesium-supported titanium catalyst or a metallocene catalyst.

As the polymerization catalyst that can be used herein, conventionally publicly known catalysts, such as a magnesium-supported titanium catalyst, metallocene catalysts described in WO01/53369, WO01/27124, JPH3-193796A, or JPH2-41303A, WO2011/055803, WO2014/050817, and the like, are suitably used. Polymerization can be carried out by appropriately selecting the method among liquid-phase polymerization methods including solution polymerization and suspension polymerization, as well as a gas-phase polymerization method, and the like.

In the liquid-phase polymerization method, inert hydrocarbon solvents can be used as solvents constituting a liquid phase. Examples of the aforementioned inert hydrocarbons include aliphatic hydrocarbons including propane, butane, pentane, hexane, heptane, octane, decane, dodecane, kerosene, and the like; alicyclic hydrocarbons including cyclopentane, cyclohexane, methylcyclopentane, methylcyclohexane, and the like; aromatic hydrocarbons including benzene, toluene, xylene, and the like; halogenated hydrocarbons including ethylene chloride, chlorobenzene, dichloromethane, trichloromethane, tetrachloromethane, and the like; mixtures thereof.

The liquid-phase polymerization method can also be a bulk polymerization method using a monomer corresponding to the constituent unit (i) derived from the aforementioned 4-methyl-1-pentene (i.e., 4-methyl-1 pentene) or a monomer corresponding to the constituent unit (ii) derived from the aforementioned α-olefin having 2 to 4 carbon atoms (i.e., the aforementioned α-olefin having 2 to 4 carbon atoms) itself as a solvent.

Carrying out stepwise copolymerization of the aforementioned 4-methyl-1-pentene and the aforementioned α-olefin having 2 to 4 carbon atoms enables a composition distribution of the constituent unit (i) of 4-methyl-1-pentene and the constituent unit (ii) of α-olefin having 2 to 4 carbon atoms, which constitute the aforementioned 4-methyl-1-pentene/α-olefin copolymer (A) to be appropriately controlled.

A polymerization temperature is preferably -50 to 200°C, more preferably 0 to 100°C, and further preferably 20 to 100°C. A polymerization pressure is preferably from normal pressure to 10 MPa gauge pressure (i.e., normal pressure or more and (normal pressure + 10 MPa) or less) and more preferably from normal pressure to 5 MPa gauge pressure (i.e., normal pressure or more and (normal pressure + 5 MPa) or less).

Hydrogen may be added upon polymerization for the purpose of controlling a molecular weight of a polymer created and polymerization activity thereof. The amount of hydrogen added is appropriately approximately 0.001 to 100 NL relative to 1 kg in total of the amount of the aforementioned 4-methyl-1-pentene and the amount of the aforementioned α-olefin having 2 to 4 carbon atoms.

<Inorganic filler (b)>

The resin composition of the present invention contains an inorganic filler (B) in addition to the aforementioned 4-methyl-1-pentene/α-olefin copolymer (A). This inorganic filler (B) plays a role to provide the resin composition of the present invention with a sufficient impact strength as well as a sufficient sense of massiveness.

The inorganic filler (B) is not particularly limited as long as it is inorganic compounds, and any publicly known inorganic filler can be used. Examples thereof include carbon black or graphite or carbon black with surface treatment by a silane coupling agent and the like, oxide-based fillers including fine silica, silica (including fumed silica, precipitated silica, diatomite, quartz, and the like), alumina, iron oxide, ferrite, magnesium oxide, titanium oxide, antimony trioxide, zirconium oxide, barium oxide, calcium oxide, and the like; hydroxide-based fillers including aluminum hydroxide, magnesium hydroxide and the like; silicate-based fillers including aluminum silicate (clay), magnesium silicate (talc), mica, kaolin, calcium silicate, glass fibers, glass flakes, glass beads, and the like; sedimentary rock-based fillers including diatomite, limestone, and the like; clay mineral-based fillers including montmorillonite, magnesian montmorillonite, iron montmorillonite, iron magnesia montmorillonite, bidellite, aluminianbidellite, nontronite, aluminiannontronite, saponite, aluminiansaponite, hectorite, sauconite, stevensite, bentonite, and the like; magnetic fillers including ferrite, iron, cobalt, and the like; conductive fillers including silver, gold, copper, alloys thereof, and the like; thermally conductive fillers including aluminum nitride, boron nitride, silicon carbide, and the like; sulfate-based fillers including aluminum sulfate, magnesium sulfate, barium sulfate, calcium sulfate, and the like; sulfite-based fillers including calcium sulfite, and the like; calcium carbonate, basic magnesium carbonate, dolomite, barium titanate, potassium titanate.

Of these described above, preferable are silica, magnesium sulfate, barium sulfate, calcium carbonate, magnesium hydroxide, magnesium oxide, and talc as inorganic fillers (B) used in the present invention, more preferable are magnesium sulfate, barium sulfate, calcium carbonate, magnesium oxide, and talc, further preferable are magnesium sulfate, barium sulfate, calcium carbonate, and talc, and most preferable are barium sulfate, calcium carbonate, and talc in terms of performance, handleability, supply stability, price, and the like.

These inorganic fillers (B) may be used singly or in combinations of two or more thereof to the extent that the characteristics of the present invention are not impaired.

A particle size of the inorganic filler (B) is preferably 0.01 μm to 100 pm, more preferably 0.01 μm to 80 pm, and further preferably 0.01 μm to 50 μm, from the viewpoint of molding processability with the 4-methyl-1-pentene/α-olefin copolymer (A) and the thermoplastic elastomer (C).

The particle size of the inorganic filler (B) can be determined by a method using a laser diffraction particle size distribution analyzer that is a publicly known method, and specifically, it is a 50% average particle size (d50) obtained from a distribution curve of cumulative percentage measured by a laser diffraction particle size distribution analyzer.

The amount of inorganic filler (B) added in the resin composition of the present invention is 10 to 50 parts by mass relative to 100 parts by mass of the total amount of the 4-methyl-1-pentene/α-olefin copolymer (A), inorganic filler (B), and "thermoplastic elastomer (C). The amount thereof added is preferably a certain amount or more from the point that a molded article comprising the resin composition obtains a sense of massiveness and a sufficient impact strength, and it is more preferably 20 parts by mass or more. The amount thereof added is, on the other hand, preferably a certain amount or less in terms of allowing a molded article comprising the resin composition to exhibit high stress relaxation, i.e., shape retention allowing a molded article to slowly recover the original shape after having been elastically deformed, and it is more preferably 50 parts by mass or less.

In the case of two or more inorganic fillers (B), the numerical range described above is applied to the total amount of inorganic fillers (B) added.

<Thermoplastic elastomer (C)>

The resin composition of the present invention contains a thermoplastic elastomer (C), in addition to the 4-methyl-1-pentene/α-olefin copolymer (A) and the inorganic filler (B). Here, the "thermoplastic elastomer (C)" used in the present invention is at least one selected from the group consisting of an olefinic thermoplastic elastomer (C1) and a styrenic thermoplastic elastomer (C2). In the present invention, both the olefinic thermoplastic elastomer (C1) and the styrenic thermoplastic elastomer (C2) described below play a role to adjust the above tanδ peak temperature required for the resin composition of the present invention to the range of 0°C or more and 60°C or less. In a typical and suitable aspect in the present invention, the resin composition of the present invention contains only either one of the olefinic thermoplastic elastomer (C1) and the styrenic thermoplastic elastomer (C2).

In the first aspect of the present invention, the resin composition of the present invention contains the 4-methyl-1-pentene/α-olefin copolymer (A), inorganic filler (B), and olefinic thermoplastic elastomer (C1), but does not contain the styrenic thermoplastic elastomer (C2).

In the second aspect of the present invention, the resin composition of the present invention contains the 4-methyl-1-pentene/α-olefin copolymer (A), inorganic filler (B), and styrenic thermoplastic elastomer (C2), however, does not contain the olefinic thermoplastic elastomer (C1).

Olefinic thermoplastic elastomer (C1)

The olefinic thermoplastic elastomer (C1) is not particularly limited, and any conventionally publicly known resins can be used as the olefinic thermoplastic elastomer (C1). Specific examples thereof include an ethylenic polymer, a propylene-based polymer, and a butene-based polymer. More specific examples thereof include

various ethylenic elastomers such as ethylenic elastomers composed of propylene-based copolymers such as a copolymer of ethylene and an α-olefin having 3 to 20 carbon atoms, a copolymer of ethylene, an α-olefin having 3 to 20 carbon atoms and a cyclic olefin, and ethylenic copolymers with various vinyl compounds such as styrene, vinyl acetate, (meth)acrylic acid, and (meth)acrylic ester, as comonomers, as well as ethylenic elastomers having a sea-island structure including polyethylene as a hard segment;
various propylene-based elastomers such as propylene-based elastomers comprising a propylene-based copolymer such as a copolymer of propylene and an α-olefin having 4 to 20 carbon atoms, a copolymer of propylene, ethylene and an α-olefin having 4 to 20 carbon atoms, and a copolymer of propylene, an α-olefin having 4 to 20 carbon atoms, and a cyclic olefin, as well as propylene-based elastomers having a sea-island structure including polypropylene as a hard segment; as well as
various butene-based elastomers such as butene-based elastomers comprising a copolymer of 1-butene and an α-olefin having 5 to 20 carbon atoms, and a copolymer of 1-butene, an α-olefin having 5 to 20 carbon atoms and a cyclic olefin, as well as butene-based elastomers having a sea-island structure including polybutene as a hard segment.

Here, the "ethylenic copolymer" refers to a copolymer composed of ethylene as a major component (specifically, copolymer containing ethylene in an amount of 50% by mass or more and preferably in an amount of 70% by mass or more), the "propylene-based copolymer" refers to a copolymer composed of propylene as a major component (specifically, copolymer containing propylene in an amount of 50% by mass or more and preferably in an amount of 70% by mass or more), and the "butene-based copolymer" refers to a copolymer composed of butene as a major component (specifically, copolymer containing butene in an amount of 50% by mass or more and preferably in an amount of 70% by mass or more).

In one of the suitable aspects of the present invention, the olefinic thermoplastic elastomer (C1) is a copolymer of propylene, ethylene and an α-olefin having 4 to 20 carbon atoms, and preferred examples thereof include a copolymer of propylene, ethylene, and butene.

The olefinic thermoplastic elastomers (C1) that may be used in the present invention may be a single type or combinations of two or more types thereof.

In the present invention, the olefinic thermoplastic elastomer (C1) may be an unmodified olefinic thermoplastic elastomer or a modified olefinic thermoplastic elastomer obtained by modifying an olefinic thermoplastic elastomer with at least one type of functional group selected from the group consisting of an acid anhydride group, a carboxyl group, an amino group, an imino group, an alkoxysilyl group, a silanol group, a silyl ether group, a hydroxyl group and an epoxy group. In one of the suitable aspects of the present invention, the olefinic thermoplastic elastomer (C1) is an unmodified olefinic thermoplastic elastomer.

Among these described above, a preferred elastomer as the olefinic thermoplastic elastomers (C1) is preferably a propylene-based copolymer because it allows for kneadability with the 4-methyl-1-pentene/α-olefin copolymer (A) and the inorganic filler (B), and facilitates molding processing as the resin composition of the present invention, thereby resulting in obtaining a flexible molded article.

Styrenic thermoplastic elastomer (C2)

The styrenic thermoplastic elastomer (C2) is, for example, a block copolymer of a polystyrene block to be a hard moiety (or crystalline moiety) and a diene-based monomer block to be a soft moiety (or amorphous moiety), and the hard moiety may be at both ends of the soft moiety. The styrenic thermoplastic elastomers (C2) include a styrene·butadiene·styrene copolymer (SBS), a hydrogenated styrene·butadiene·styrene copolymer (hydrogenated styrene·butadiene rubber) (HSBR), a styrene·ethylene·propylene·styrene block copolymer (SEPS), a styrene·ethylene·butene·styrene block copolymer (SEBS), a styrene·isoprene·styrene block copolymer (SIS), a styrene·isobutylene·styrene copolymer (SIBS), a styrene·isobutylene copolymer (SIB), a styrene·ethylene·butene·styrene·styrene copolymer (SEBSS), and the like.

The styrenic thermoplastic elastomer (C2) that can be used in the present invention may be a single type thereof or combinations of two or more types thereof.

Commercially available styrenic thermoplastic elastomers of the styrenic thermoplastic elastomer (C2) may also be used.

HSBR includes DYNARON (registered trademark) manufactured by JSR Corporation. SEPS is a hydrogenated product of a styrene·isoprene·styrene block copolymer (SIS). SIS includes JSR SIS (registered trademark) manufactured by JSR Corporation, HYBRAR (registered trademark) manufactured by KURARAY CO., LTD., Kraton D (registered trademark) manufactured by Kraton Polymer Japan Ltd., and the like. SEPS includes SEPTON (registered trademark) manufactured by KURARAY CO., LTD., or Kraton (registered trademark) manufactured by Kraton Polymer Japan Ltd., or the like. SEBS includes Tuftec H series (registered trademark) manufactured by ASAHI KASEI CORPORATION, Kraton (registered trademark) manufactured by Kraton Polymer Japan Ltd., and the like. SEBSS includes S.O.E. (registered trademark) manufactured by Asahi Kasei Corporation, which has a structure including styrene also in a soft moiety. SIB and SIBS include SIBSTAR (registered trademark) manufactured by Kaneka Corporation, and the like. Examples of commercially available products compounded in combinations of the aforementioned styrenic copolymers with other resins such as polyolefins include TEFABLOC (registered trademark) manufactured by Mitsubishi Chemical Corporation, EARNESTON (registered trademark) manufactured by KURARAY PLASTICS Co., Ltd., Elastomer AR series (registered trademark) manufactured by Aronkasei Co., Ltd.

Amount of thermoplastic elastomer (C) added

The amount of thermoplastic elastomer (C) added in the resin composition of the present invention is 5 to 49 parts by mass relative to 100 parts by mass of the total amount of 4-methyl-1-pentene/$\alpha$-olefin copolymer (A), inorganic filler (B), and thermoplastic elastomer (C). The amount added is preferably a certain amount or more and more preferably 10 parts by mass or more, from the point of adjusting a tan$\delta$ peak temperature of the resin composition within the range of 0°C or more and 60°C or less. The amount added is, on the other hand, preferably a certain amount or less and more preferably 40 parts by mass or less, from the point of shape retention whereby a molded article comprising the aforementioned resin composition slowly recovers its original shape after having been elastically deformed.

Here, in the case of the thermoplastic elastomer (C) being of two or more types (i.e., in a case in which two or more types of olefinic thermoplastic elastomers are used as the olefinic thermoplastic elastomers (C1), and in a case in which two or more types of styrenic thermoplastic elastomers are used as the styrenic thermoplastic elastomers (C2)), the total amount of added thermoplastic elastomer (C) that can be contained in the resin composition of the present invention stays in the aforementioned numerical range.

<Other component>

The resin composition of the present invention contains the aforementioned 4-methyl-1-pentene/$\alpha$-olefin copolymer (A), the aforementioned inorganic filler (B), and the aforementioned thermoplastic elastomer (C). Here, the resin composition of the present invention may consist of the 4-methyl-1-pentene/$\alpha$-olefin copolymer (A), the inorganic filler (B), and the thermoplastic elastomer (C). However, the resin composition of the present invention may further contain other component that does not fall under the 4-methyl-1-pentene/$\alpha$-olefin copolymer (A), the inorganic filler (B), or the thermoplastic elastomer (C) (hereinafter "other component"), as required to the extent that the characteristics of the present invention are not impaired. Such "other components" may include publicly known additives.

Examples of the additives include but not limited to, softeners, mold-releasing agents, antioxidants, flame retardants, UV absorbers, surfactants, antistatic agents, pigments, dyes, slipping agents, weathering stabilizers, heat stabilizers, infrared absorbers, anti-blocking agents, antifogging agents, lubricants, plasticizers, anti-aging agents, hydrochloric acid absorbers, crystal nucleating agents, antifungal agents, antibacterial agents, and organic fillers. One type of these additives may be used singly or two or more types thereof may be combined for use.

Examples of softeners include petroleum-based substances including process oil, lubricating oil, paraffin, liquid paraffin, polyethylene wax, polypropylene wax, petroleum asphalt, vaseline, and the like; coal tars including coal tar, coal tar pitch, and the like; fatty oils including castor oil, castor bean oil, rapeseed oil, soybean oil, coconut oil, and the like; waxes including tall oil, beeswax, carnauba wax, lanolin, and the like; fatty acids including ricinoleic acid, palmitic acid, stearic acid, 12-hydroxystearic acid, montanoic acid, oleic acid, erucic acid, and the like; or metal salts thereof; synthetic polymers including petroleum resins, a coumarone-indene resin, atactic polypropylene, and the like; ester-based plasticizers including dioctyl phthalate, dioctyl adipate, dioctyl sebacate, and the like; microcrystalline waxes, liquid polybutadiene or modified or hydrogenated products thereof; as well as publicly known softeners including liquid thiokol.

Furthermore, the softeners include aromatic carboxylic acid esters (such as dibutyl phthalate), aliphatic carboxylic acid esters (such as methyl acetyl ricinolate), aliphatic dicarboxylic acid esters (such as adipic acid-propylene glycol-based polyester), aliphatic tricarboxylic acid esters (such as triethyl citrate), phosphate triesters (such as triphenyl phosphate), epoxy fatty acid esters (such as epoxy butyl stearate), petroleum resins, and the like.

Examples of mold-releasing agents include lower alcohol esters (with 1 to 4 carbon atoms) of higher fatty acids (such as butyl stearate), polyhydric alcohol esters of fatty acids (with 4 to 30 carbon atoms) (such as hardened castor oil), glycol esters of fatty acids, and liquid paraffin.

Examples of antioxidants include phenolic (such as 2,6-di-t-butyl-4-methylphenol), polycyclic phenolic (such as 2,2'-methylenebis(4-methyl-6-t-butylphenol) and other methylene bridged polycyclic phenols), phosphorus-based (such as tetrakis(2,4-di-t-butylphenyl)-4,4-biphenylenediphosphonate), and amine-based (such as N,N-diisopropyl-p-phenylenediamine) compounds.

Examples of flame retardants include phosphate esters such as ammonium polyphosphate, ethylene bis-tris(2-cyanoethyl)phosphonium chloride, tris(tribromophenyl)phosphate, tris(tribromophenyl)phosphate, and tris(3-hydroxypropyl)phosphine oxide, and other phosphorus compounds, chlorine-based flame retardants such as chlorinated paraffins, chlorinated polyolefins and perchlorocyclopentadecane, and bromine-based flame retardants such as hexabromobenzene, ethylene-bis(dibromonorbornan dicarboximide), ethylene-bis(tetrabromophthalimide), tetrabromobisphenol A derivatives, tetrabromobisphenol S, and tetrabromodipentaerythritol, and mixtures thereof.

Examples of UV absorbing agents include benzotriazole-based, benzophenone-based, salicylic acid-based, and acrylate-based compounds.

Antibacterial agents include quaternary ammonium salts, pyridine-based compounds, organic acids, organic acid esters, halogenated phenols, organic iodides, and the like.

Examples of surfactants can include nonionic, anionic, cationic or amphoteric surfactants. Nonionic surfactants include polyethylene glycol type nonionic surfactants such as higher alcohol ethylene oxide adducts, fatty acid ethylene oxide adducts, higher alkylamine ethylene oxide adducts, polypropylene glycol ethylene oxide adducts, and polyhydric alcohol type nonionic surfactants such as fatty acid esters of polyethylene oxide or glycerin, fatty acid esters of pentaerythritol, fatty acid esters of sorbit or sorbitan, alkyl ethers of polyhydric alcohols, and aliphatic amides of alkanolamines; and the like, and examples of anionic surfactants include sulfuric acid ester salts such as alkali metal salts of higher fatty acids, sulfonate salts such as alkyl benzene sulfonates, alkyl sulfonates, and paraffin sulfonates, and phosphoric acid ester salts such as higher alcohol phosphates, and cationic surfactants include quaternary ammonium salts such as alkyl trimethyl ammonium salts. Amphoteric surfactants include amino acid-type ampholytic surfactants such as higher alkyl aminopropionates, betaine-type amphoteric surfactants such as higher alkyl dimethyl betaine and higher alkyl dihydroxyethyl betaine, and the like.

Examples of antistatic agents include the aforementioned surfactants, fatty acid esters, and polymer-type antistatic agents. The fatty acid esters include esters of stearic acid and oleic acid, and the like, and the polymer-type antistatic agents include polyetheresteramides and the like.

Examples of pigments include inorganic pigments (such as titanium oxide, iron oxide, chromium oxide, and cadmium sulfide) and organic pigments (azo lake-based, thioindigo-based, phthalocyanine-based, anthraquinone-based pigments). Examples of dyes include azo-based, anthraquinone-based, and triphenylmethane-based dyes.

The amount of these pigments or dyes added is not particularly limited, but is usually 5 parts by mass or less and preferably 0.1 to 3 parts by mass relative to 100 parts by mass of the resin composition of the present invention.

Examples of slipping agents include waxes (such as carnauba wax), higher fatty acids (such as stearic acid), higher fatty acid salts (such as calcium stearate), higher alcohols (such as stearyl alcohol), and higher fatty acid amides (such as stearic acid amide and erucic acid amide).

The amounts of the aforementioned various additives added are not particularly limited, but depend on applications thereof within the range where the purpose of the present invention is not impaired, and the total amount of each of the aforementioned various additives added is preferably from 0.01 to 30 parts by mass relative to 100 parts by mass of the resin composition of the present invention.

Typical and exemplary aspects of the resin composition of the present invention include those listed in (X1) to (X4) below:

(X1) A resin composition comprising the 4-methyl-1-pentene/α-olefin copolymer (A), the inorganic filler (B) and the olefinic thermoplastic elastomer (C1);

(X2) A resin composition comprising the 4-methyl-1-pentene/$\alpha$-olefin copolymer (A), the inorganic filler (B) and the styrenic thermoplastic elastomer (C2);

(X3) A resin composition consisting of the 4-methyl-1-pentene/$\alpha$-olefin copolymer (A), the inorganic filler (B), the olefinic thermoplastic elastomer (C1), and the various additives;

(X4) A resin composition consisting of the 4-methyl-1-pentene/$\alpha$-olefin copolymer (A), the inorganic filler (B), the styrenic thermoplastic elastomer (C2), and the various additives.

In the case of the resin composition of the present invention containing "other component", the total amount of "other components" in the resin composition of the present invention is preferably from 0.01 to 30 parts by mass, for example, more preferably 0.1 to 3 parts by mass, relative to 100 parts by mass of the total amount of the 4-methyl-1-pentene/$\alpha$-olefin copolymer (A), the inorganic filler (B), and the thermoplastic elastomer (C).

<Production method of resin composition>

A method for producing the resin composition of the present invention is not particularly limited, and, for example, any conventionally publicly known production method can be employed. The method includes a method for dry blending the 4-methyl-1-pentene/$\alpha$-olefin copolymer (A), the organic filler (B), the thermoplastic elastomer (C), and the optional "other components," which constitute the resin composition of the present invention, by using a publicly known mixer. Here, the mixer includes, for example, a Henschel mixer, tumbler blender, and V-blender.

After dry blending the above compounds constituting the resin composition of the present invention by using the mixer, a method can be employed in which a resultant blend is then melt-kneaded by using a single screw extruder, a twin screw extruder, a Banbury mixer, a kneader, a roll mill, and the like, under a temperature set at 180 to 250°C followed by granulation or pulverization. Of these methods, preferred is melt-kneading by a twin-screw extruder or a Banbury mixer from the viewpoint of mixability and productivity of each component. Those methods enable high quality pellets in which each component is uniformly mixed and dispersed to be obtained.

The inorganic filler (B) may be used in the form of a mixture with a resin component such as the aforementioned 4-methyl-1-pentene/$\alpha$-olefin copolymer (A), for example, the form of a master batch obtained by preliminarily mixing the inorganic filler (B) and a resin component such as the 4-methyl-1-pentene/$\alpha$-olefin copolymer (A).

<Production method of molded article>

A molded article of the present invention comprises the resin composition of the present invention as described above. Examples of the molded article of the present invention include toys, daily necessities, and earpiece components, and, in addition to them, sheet molded articles.

A method for producing the molded article of the present invention is not particularly limited and for example, includes conventionally publicly known production methods, such as injection molding, extrusion molding, compression molding, 3D modeling, and microwave heating molding. Among such molding methods, preferred is injection molding with a required mold, and molded articles can be suitably produced by such injection molding.

In a case in which a sheet molded article is desired to be obtained, sheet extrusion molding with a general T-die attached is preferably employed. A sheet can be produced by being formed into a film at a cylinder temperature of 180 to 250°C and a casting roll temperature of 20 to 80°C by using a single screw extruder or a twin screw extruder with a T-die attached. A thickness of the sheet depends on its application, and is usually from 10 to 1,000 $\mu$m and preferably 20 to 500 pm, from which pinholes are prevented from being formed upon sheet molding, thereby resulting in providing a sufficient mechanical strength and being advantageous for mass production of the sheet.

The surface of a sheet may undergo emboss processing, and the sheet may be stretched upon or after sheet molding. Furthermore, annealing treatment at a temperature below the melting point of the resin may be performed for the purpose of removing residual stress from the sheet.

<Applications of molded article>

The molded article comprising the resin composition of the present invention has characteristics in that it slowly recovers the original shape after having been elastically deformed, in addition that it improves fits due to high stress relaxation in the room temperature range.

The molded article comprising the resin composition of the present invention is useful, for example, not only for daily necessities, toys, ear piece components, and sheets, but also for conventionally publicly known automotive materials, clothing materials, sanitary materials, construction materials, sports materials, lifestyle materials, leisure materials, industrial materials, electronic materials, and the like.

The molded article of the present invention can also be used in the field of household commodities. Specifically, it includes containers for foods, tableware such as forks and spoons (in particular, handles and grips of forks and spoons), and plates. They are useful as containers and tableware that can replace ceramics in terms of being easily formed by injection molding and providing a sense of massiveness.

The molded articles can also be extended to other applications using ceramics, for example, for daily necessities such as lampshades and vases, structural members of certain acoustic speakers, and water related products such as washbasins and toilet bowls. In addition to ceramics, by taking advantage of the characteristics of capable of imparting a sense of massiveness, the molded articles can be also extended to models such as plastic models, components for musical instruments, tiles, artificial marble substitutes, architectural components, and the like. The molded articles are also useful as containers such as containers with lids (including airless containers and the like), and cosmetic compacts. In addition, the molded articles are also useful as filament materials for 3D printers, taking advantage of their molding processability and shape retention.

Furthermore, the molded articles are also useful as, for example, earpiece components, taking advantages of characteristics such as a sense of massiveness, tactile feel, and designability. Hearing aids are properly fitted in an ear and can be used stably and comfortably.

In particular, wearable devices allowing them to be carried around have been increasingly progressed. Of these devices, the molded articles are useful for earphone components that are connected to acoustic devices using a connector, or those for listening using wireless communication means such as Bluetooth, Wi-Fi, and infrared, and the like. The molded articles reduce pressure against ears and prevent excessive earphone movement, resulting in better fits and comfort. They can also be suitably used as a band member for smartwatches.

Furthermore, the molded articles are useful as, for example, heat dissipation materials for electronic information materials, taking advantage of filling up capacity of inorganic materials and followability. Particularly recently, the amount of heat emitted from electronic devices has been increased due to higher resolution of semiconductor circuits, thereby requiring improvements in efficiency by using heat dissipation materials, and the molded articles can efficiently improve an heat dissipation effect, taking advantage of its adhesiveness and followability.

EXAMPLES

Hereinafter the present invention will be described in detail with reference to Examples, but the present invention is not limited to these Examples. Measurement methods of physical properties of the resin, the resin used, and fabrication methods and evaluation methods of the test specimens, in the following Examples and Comparative Examples are as follows.

[Measurement methods of physical properties of resins]

<Content percentage of constituent unit>

The contents of 4-methyl-1-pentene and $\alpha$-olefin in a polymer were quantified based on results obtained by $^{13}$C-NMR measurements using the following apparatus and conditions. Note, however, the content of $\alpha$-olefin obtained in the results of this measurement does not include the content of 4-methyl-1-pentene.

Measurement was performed by using an ECP500 nuclear magnetic resonance apparatus manufactured by JEOL Ltd. with an ortho-dichlorobenzene/deuterated benzene (80/20% by volume) mixed solvent, sample concentration: 55 mg/0.6 mL, measurement temperature: 120°C, observation nucleus: $^{13}$C (125 MHz), sequence: single-pulse proton decoupling, pulse width: 4.7 psec (45° pulse), repetition time: 5.5 sec, the number of scans: 10,000 times or more, and reference value for chemical shift: 27.50 ppm. By use of the obtained $^{13}$C-NMR spectrum was quantified a composition of the 4-methyl-1-pentene/$\alpha$-olefin (A) .

<Intrinsic viscosity>

Intrinsic viscosity is a value measured at 135°C in decalin using a Ubbelode viscometer. Approximately 20 mg of polymerized powder and pellets or a resin mass were taken and dissolved in 15 mL of decalin, and for a resulting decalin solution was measured a specific viscosity $\eta$sp in an oil bath heated to 135°C. To this decalin solution was added 5 mL of a decalin solvent for dilution, and the specific viscosity $\eta$sp was measured in the same manner. This dilution operation was further repeated two times, and a value of $\eta$sp/C when a concentration (C) was extrapolated to zero, was calculated as an intrinsic viscosity [$\eta$] (see formula below).

$$[\eta] = \lim (\eta sp/C) \; (C \to 0)$$

<Weight-average molecular weight (Mw), number-average molecular weight (Mn), and molecular weight distribution (Mw/Mn value)>

A molecular weight was measured by gel permeation chromatography (GPC).

Specifically, an ALC/GPC150-C plus type (with an integrated differential refractometer detector) manufactured by Waters Corporation was used as a liquid chromatograph, two GMH6-HT columns manufactured by Tosoh Corporation and two GMH6-HTL columns manufactured by Tosoh Corporation, were used as separation columns connected in series, a mobile phase medium that was o-dichlorobenzene with 0.025% by mass dibutylhydroxytoluene (manufactured by Takeda Chemical Industries, LTD.) as an antioxidant, was used, the mobile phase medium was moved at 1.0 mL/minutes, a sample concentration was set at 15 mg/10 mL, an injection volume of the sample was 500 μL, and a detector that was a differential refractometer was used. Standard polystyrenes that were standard polystyrenes manufactured by Tosoh Corporation were used with weight-average molecular weights (Mw) of 1,000 or more and 4,000,000 or less.

The obtained chromatograms were analyzed by a publicly known method by creating a calibration curve by using standard polystyrene samples, thereby calculating a weight average molecular weight (Mw), number average molecular weight (Mn), and molecular weight distribution (Mw/Mn values). The measurement time per sample was 60 min.

<Melt mass flow rate (MFR)>

The MFR was measured in accordance with ASTM D1238 at a temperature of 230°C and a load of 2.16 kg.

<Melting point>

In accordance with JIS K7121, a melting point was defined as the highest temperature of the melting peak apex measured at a rate of temperature rise of 10°C/minute by using a differential scanning calorimeter DSC220C manufactured by a Seiko Instruments Inc.

<Density of 4-methyl-1-pentene/α-olefin copolymer (A)>

The density ($kg/m^3$) of the 4-methyl-1-pentene/α-olefin copolymer (A) was measured using a density gradient tube in accordance with JIS K7112.

<Synthesis of 4-methyl-1-pentene/α-olefin copolymer (A)>

A SUS autoclave of 1.5 L capacity with stirring blades, which had been thoroughly replaced with nitrogen, was charged with 300 ml of n-hexane (dried on activated alumina under a dry nitrogen atmosphere) and 450 ml of 4-methyl-1-pentene at 23°C. The autoclave was charged with 0.75 ml of a 1.0 mmol/ml toluene solution of triisobutylaluminum (TIBAL), and the resulting mixture was stirred.

Next, the autoclave was heated to an internal temperature of 60°C and pressurized with propylene to a total pressure (gauge pressure) of 0.40 MPa.

Subsequently, to the autoclave was added 0.34 ml of a toluene solution containing 1 mmol of methylaluminoxane in terms of aluminum, which had preliminarily been prepared, and 0.01 mmol of diphenylmethylene (1-ethyl-3-t-butylcyclopentadienyl)(2,7-di- t-butyl-fluorenyl) zirconium dichloride under pressure with nitrogen gas, to allow polymerization to start.

During the polymerization reaction, the temperature of the autoclave was adjusted so that the internal temperature of the autoclave was 60°C.

After 60 minutes from the start of polymerization, 5 ml of methanol was added into the autoclave under pressure with nitrogen gas to terminate the polymerization reaction, and then the autoclave was depressurized to atmospheric pressure. After depressurization, the reaction solution was stirred while acetone was added.

The resulting powdery copolymer containing the solvent was dried at 100°C for 12 hours under reduced pressure. The product, 4-methyl-1-pentene/α-olefin copolymer (A) weighed 36.9 g, the content of 4-methyl-1-pentene in the copolymer was 72.3 mol% and the content of propylene was 27.7 mol%. The DSC measurement demonstrated no melting point observed. The measurement results of each of physical properties are shown in Table 1.

<Dynamic viscoelasticity measurement of 4-methyl-1-pentene/α-olefin copolymer (A)>

The 4-methyl-1-pentene/α-olefin copolymer (A) obtained by the method described above was filled in a prescribed amount into a SUS mold frame. Then, using a hydraulic heat press machine (PEWR-30 manufactured by KANSAI ROLL Co., Ltd.), a temperature of whose heating panel had been set to 200°C, the 4-methyl-1-pentene/α-olefin copolymer (A) was preheated for 7 minutes and was pressurized for 2 minutes at a gauge pressure of 10 MPa, and a resultant pressed sheet was then transferred to a cooling panel set at 20°C, compressed at a gauge pressure of 10 MPa, and cooled for 3 minutes, to give a press sheet for measurement with a thickness of 2.0 mm.

Next the press sheet for measurement with a thickness of 2.0 mm obtained by the aforementioned method was punched out to give a test specimen with a length of 35 mm × width of 10 mm, underwent dynamic viscoelasticity measurement in the range of -40 to 150°C under the conditions of torsion mode, frequency of 10 rad/s (1.6 Hz), strain setting of 0.1%, and rate of temperature rise of 2°C/minute, using a rheometer (MCR301 manufactured by Anton Paar GmbH), and the obtained temperature dispersion results demonstrated a tan δ peak value of 2.70 and a tan δ peak temperature of 30°C.

The measurement results of each of physical properties are shown in Table 1.

[Table 1]

[Table 1]

| | | Unit | 4-methyl-1-pentene' α-olefin copolymer (A) |
|---|---|---|---|
| Content of 4-methyl-1-pentene | | mol% | 72.3 |
| α-olefin species | | - | Propylene |
| Content of α-olefin | | mol% | 27.7 |
| Intrinsic viscosity [η] | | dl/g | 1.5 |
| Weight-average molecular weight (Mw) | | - | 314,000 |
| Number-average molecular weight (Mn) | | - | 154,000 |
| Molecular weight distribution (Mw/Mn) | | - | 2.04 |
| Melt mass flow rate (230°C, 2.16 kgf) | | g/10 minutes | 11 |
| Melting point | | °C | Not observed |
| Density | | kg/m$^3$ | 840 |
| Dynamic viscoelasticity | Tanδ peak temperature | °C | 30 |
| | Tanδ peak value | - | 2.70 |

<Inorganic filler (B)>

An inorganic filler (B-1) that was heavy calcium carbonate (KS-1000 manufactured by CALFINE CO., LTD.: 50% average particle size 4.2 pm), was used.

<Inorganic filler (B-2)>

An inorganic filler (B-2) that was barium sulfate (manufactured by Sakai Chemical Industry Co., Ltd., average particle size 10.0 pm), was used.

<Olefinic thermoplastic elastomer (C1)>

The following three olefinic thermoplastic elastomers (C1) were used.

(C1-1): TAFMER PN-2060 manufactured by Mitsui Chemical Inc. (melt mass flow rate (MFR; in accordance with ASTM D1238, temperature 230°C, load 2.16 kg) 6 g/10 minutes, density 868 kg/m3, melting point 160°C, surface hardness (in accordance with ASTM D2244) Shore A84)

(C1-2): Mitsui EPT3072 EPM manufactured by Mitsui Chemical Inc. (melt mass flow rate (MFR; in accordance with ASTM D1238, temperature 190°C, load 2.16 kg) 1.0 g/10 minutes, density 880 kg/m$^3$, no melting point observed)

(C1-3): Mitsui EPT K-9720M manufactured by Mitsui Chemical Inc. (melt mass flow rate (MFR; in accordance with ASTM D1238, temperature 190°C, load 2.16 kg) 0.5 g/10 minutes, density 870 kg/m$^3$, no melting point observed)

<Styrenic thermoplastic elastomer (C2)>

The following four types of styrenic thermoplastic elastomers (C2) were used.
(C2-1): TUFTEC H1052 manufactured by Asahi Kasei Corporation (melt mass flow rate (MFR; in accordance with ASTM D1238, temperature 230°C, load 2.16 kgf) 13 g/10 minutes, density 0.89 g/cm$^3$, surface hardness (in accordance with ASTM D2244) Shore A67)
(C2-2): TUFTEC H1272 manufactured by Asahi Kasei Corporation (density 0.90 g/cm$^3$, surface hardness (in accordance with ASTM D2244) Shore A35, oil extended composition)
(C2-3): EARNESTONE CJ001N manufactured by Kuraray Plastic Co., Ltd. (melt mass flow rate (MFR; in accordance with ASTM D1238, temperature 230°C, load 2.16 kgf) 2 g/10 minutes, density 0.90 g/cm$^3$, surface hardness (in accordance with ASTM D2244) Shore A40)
(C2-4): EARNESTONE JS20N manufactured by Kuraray Plastic Co., Ltd. (melt mass flow rate (MFR; in accordance with ASTM D1238, temperature 190°C, load 2.16 kgf) 15 g/10 minutes, density 0.89 g/cm$^3$, surface hardness (in accordance with JIS K6253-3) Shore E20)
(C2-5): S.O.E. S1613 manufactured by Asahi Kasei Corporation (melt mass flow rate (MFR; in accordance with ASTM D1238, temperature 230°C, load 2.16 kgf) g/14 minutes, density 0.93 g/cm$^3$, surface hardness (in accordance with ASTM D2244) Shore A46)

With regard to the olefinic thermoplastic elastomer (C1) and the styrenic thermoplastic elastomer (C2), the numerical values just after the expressions "Shore A" and "Shore E" are values at Shore A hardness and Shore E hardness, respectively.

<Propylene-based resin (E)>

A propylene-based resin (E) that was a propylene homopolymer, J105G manufactured by Prime Polymer Inc. (melt mass flow rate (MFR; in accordance with ASTM D1238, temperature 230°C, load 2.16 kg) 9 g/10 minutes, melting point 162°C), was used.

<Fabrication of resin composition>

A Banbury mixer (BB-L1800 manufactured by Kobe Steel, Ltd.: tangential 4-blade rotor, kneading tank volume 1.63 L) equipped with a single screw extruder for the purpose of pelletizing the resin composition of the present invention, was used. A hopper of the Banbury mixer was charged with predetermined amounts of various resin components that had preliminarily been dry-blended and pushed into a mixing chamber by a floating weight, and it was charged with a predetermined amount of the inorganic filler (B) through a hopper side plate. The resulting mixture was melted and kneaded under the conditions of a temperature setting of 220°C and a rotor speed of 80 rpm, and the resulting kneaded mixture maintaining a molten state was fed into the single screw extruder, and granulated using a die with circular holes (pelletizing head), a cooling water tank, and a pelletizer, to give pellets composed of the resin composition. The resulting pellets of resin composition were uniformly mixed and dispersed, and the diameter of the pellet ranged from 2.5 to 3.0 mm.

<Fabrication of molded article>

In order to evaluate physical properties of a molded article based on the material composition of the resin composition, a square plate with a length of 120 mm × width of 130 mm × thickness of 2 mm and a dumbbell (dumbbell-shaped molded test specimen) with a thickness of 3 mm for mechanical property measurement in accordance with ASTM D638, were fabricated, using an injection molding machine (ES75SXIII: mold clamping force 735 kN, screw diameter φ32 mm, manufactured by TOSHIBA MACHINE CO., LTD.). Note, however, the major molding conditions are as follows.
- Cylinder setting temperature: 220 to 240°C
- Screw rotation speed: 100 rpm
- Injection pressure: 30 to 40 MPa
- Injection speed: 25 to 30 mm/second
- Mold temperature: 30 to 60°C (40°C for square plates)
- Cooling time: 30 to 60 seconds (40 seconds for square plates)

Evaluation of physical properties of molded article

<Measurement of dynamic viscoelasticity>

The molded article with a thickness of 2.0 mm, obtained by the aforementioned method, was punched out to fabricate a test specimen with dimensions of a length of 35 mm × width of 10 mm, and a tanδ peak temperature and a tanδ peak value in temperature dispersion from -40 to 150°C were observed by using a rheometer (MCR301 manufactured by Anton Paar GmbH) under the conditions of torsion mode, frequency 10 rad/s (1.6 Hz), strain setting 0.1%, and rate of temperature rise 2 °C/min.

<Density of molded article>

The molded article(square plate) with a thickness of 2 mm (2.0 mm), obtained by the aforementioned method, was punched out to fabricate a test specimen with dimensions of a length of 62 mm × width of 13 mm, and the density (g/cm$^3$) of the molded article was measured by Immersion method in accordance with JIS K7112.

<Surface hardness>

The three sheets of molded articles (square plates) with a thickness of 2 mm (2.0 mm), obtained by the aforementioned method, were stacked on top of each other and a resultant stack was used as a test specimen, and Shore A hardness of the test specimen was measured in accordance with ASTM D2244, immediately after a pushing needle of a hardness tester was pressed against the surface of the test specimen at 23°C, and 15 seconds after the pressing. Normally, a hardness tester is changed to that for Shore D when hardness reaches Shore A 90 or more, however, a test specimen was measured without changing the hardness tester even when hardness reaches Shore A 90 or more, for the purpose of obtaining displacements with an elapsed time under a pressure of the pushing needle.
A value of ΔHS was calculated based on the following formula, according to the respective Shore A hardness values obtained.

```
ΔHS = (Shore A hardness value immediately after the

start of pushing needle contact - Shore A hardness value 15

seconds after the start of pushing needle contact)
```

<Mechanical properties>

The tensile strength and tensile modulus of a molded article were measured by a tensile test using the dumbbell-shaped molded test specimens described above. The tensile test was conducted at a testing speed of 50 mm/minute at 23°C in accordance with ASTM D638 by using a 5-STRAND tensile testing machine 2005X-5 manufactured by Intesco co., ltd.

<Molding shrinkage ratio>

Shrinkage ratio was obtained by using the above-mentioned molded article (square plate) with a thickness of 2.0 mm, measuring differences between lengths of four sides of the molded article and those of an injection mold used in the above-mentioned injection molding and calculating dimensional changes with respect to lengths of the mold.

[Example 1]

Pellets were obtained by being melt kneaded as by the method described above, in a material composition of a resin composition containing 32 parts by mass of 4-methyl-1-pentene/α-olefin copolymer (A), 48 parts by mass of inorganic filler (B-1), and 20 parts by mass of olefinic thermoplastic elastomer (C1).
The pellets were then used to fabricate a molded article and various test specimens as by the method described above, and physical properties were evaluated as described above. The results are shown in Table 2-1.

[Example 2]

A molded article and various test specimens were fabricated in the same manner as in Example 1, except that the amounts compounded of resin and inorganic filler (B-1) used were changed to those described in Table 2-1, and physical properties thereof were evaluated. The results are shown in Table 2-1.

[Example 3]

A molded article and various test specimens were fabricated in the same manner as in Example 1, except that the olefinic thermoplastic elastomer (C1) was changed to styrenic thermoplastic elastomer (C2-1) among the resins used, and physical properties thereof were evaluated. The results are shown in Table 2-1.

[Example 4]

A molded article and various test specimens were fabricated in the same manner as in Example 1, except that the olefinic thermoplastic elastomer (C1) was changed to styrenic thermoplastic elastomer (C2-2) among the resins used, and physical properties thereof were evaluated. The results are shown in Table 2-1.

[Example 5]

A molded article and various test specimens were fabricated in the same manner as in Example 4, except that the amounts compounded of resin and inorganic filler (B-1) used were changed to those described in Table 2-1, and physical properties thereof were evaluated. The results are shown in Table 2-1.

[Example 6]

Pellets were obtained by being melt kneaded as by the method described above, in a material composition of a resin composition containing 30 parts by mass of a 4-methyl-1-pentene/$\alpha$-olefin copolymer (A), 40 parts by mass of an inorganic filler (B-1),and 30 parts by mass of a styrenic thermoplastic elastomer (C2-3).
The pellets were then used to fabricate a molded article and various test specimens as by the method described above, and physical properties were evaluated as described above. The results are shown in Table 2-1.

[Example 7]

A molded article and various test specimens were fabricated in the same manner as in Example 6, except that the amounts compounded of resin and inorganic filler (B-1) used were changed to those described in Table 2-1, and physical properties thereof were evaluated. The results are shown in Table 2-1.

[Example 8]

A molded article and various test specimens were fabricated in the same manner as in Example 6, except that the styrenic thermoplastic elastomer (C2-3) was changed to a styrenic thermoplastic elastomer (C2-4) among the resins used, and physical properties thereof were evaluated. The results are shown in Table 2-2.

[Example 9]

A molded article and various test specimens were fabricated in the same manner as in Example 8, except that the amounts compounded of resin and inorganic filler (B-1) used were changed as those described in Table 2-2, and physical properties thereof were evaluated. The results are shown in Table 2-2.

[Example 10]

A molded article and various test specimens were fabricated in the same manner as in Example 8, except that the amounts compounded of resin and inorganic filler (B-1) used were changed as those described in Table 2-2, and physical properties thereof were evaluated. The results are shown in Table 2-2.

[Example 11]

Pellets were obtained by being melt kneaded as by the method described above, in a material composition of a resin composition containing 40 parts by mass of a 4-methyl-1-pentene/α-olefin copolymer (A), 30 parts by mass of an inorganic filler (B-1),and 30 parts by mass of a styrenic thermoplastic elastomer (C2-5).
The pellets were then used to fabricate a molded article and various test specimens as by the method described above, and physical properties were evaluated as described above. The results are shown in Table 2-2.

[Example 12]

Pellets were obtained by being melt kneaded as by the method described above, in a material composition of a resin composition containing 40 parts by mass of a 4-methyl-1-pentene/α-olefin copolymer (A), 30 parts by mass of an inorganic filler (B-2), and 30 parts by mass of a styrenic thermoplastic elastomer (C2-5).
The pellets were then used to fabricate a molded article and various test specimens as by the method described above, and physical properties were evaluated as described above. The results are shown in Table 2-2.

[Example 13]

Pellets were obtained by being melt kneaded as by the method described above, in a material composition of a resin composition containing 50 parts by mass of a 4-methyl-1-pentene/α-olefin copolymer (A), 40 parts by mass of an inorganic filler (B-1), and 10 parts by mass of an olefinic thermoplastic elastomer (C1-2).
The pellets were then used to fabricate a molded article and various test specimens as by the method described above, and physical properties were evaluated as described above. The results are shown in Table 2-2.

[Example 14]

A molded article and various test specimens were fabricated in the same manner as in Example 13, except that the amounts compounded of resin and inorganic filler (B-1) used were changed as those described in Table 2-2, and physical properties thereof were evaluated. The results are shown in Table 2-2.

[Example 15]

Pellets were obtained by being melt kneaded as by the method described above, in a material composition of a resin composition containing 50 parts by mass of a 4-methyl-1-pentene/α-olefin copolymer (A), 40 parts by mass of an inorganic filler (B-1),and 10 parts by mass of a olefinic thermoplastic elastomer (C1-3).
The pellets were then used to fabricate a molded article and various test specimens as by the method described above, and physical properties were evaluated as described above. The results are shown in Table 2-3.

[Example 16]

A molded article and various test specimens were fabricated in the same manner as in Example 15, except that the amounts compounded of resin and inorganic filler (B-1) used were changed as those described in Table 2-3, and physical properties thereof were evaluated. The results are shown in Table 2-3.

[Comparative Example 1]

A molded article and various test specimens were fabricated in the same manner as in Example 1, except that the material composition of the resin composition was changed to a 4-methyl-1-pentene/α-olefin copolymer (A) singly, and physical properties thereof were evaluated. The results are shown in Table 2-3.

[Comparative Example 2]

Pellets were obtained by being melt kneaded as by the method described above, in a material composition of a resin composition containing 30 parts by mass of a 4-methyl-1-pentene/α-olefin copolymer (A) and 70 parts by mass of an inorganic filler (B-1).
The pellets were then used to fabricate a molded article and various test specimens as by the method described above, and physical properties thereof were evaluated as described above. The results are shown in Table 2-3.

[Comparative Example 3]

Pellets were obtained by being melt kneaded as by the method described above, in a material composition of a resin composition containing 40 parts by mass of a 4-methyl-1-pentene/$\alpha$-olefin copolymer (A) and 60 parts by mass of a propylene-based resin (E).

The pellets were then used to fabricate a molded article and various test specimens as by the method described above, and physical properties thereof were evaluated as described above. The results are shown in Table 2-3.

[Comparative Example 4]

Pellets were obtained by being melt kneaded as by the method described above, in a material composition of a resin composition containing 30 parts by mass of a 4-methyl-1-pentene/$\alpha$-olefin copolymer (A) and 70 parts by mass of an inorganic filler (B-2).

The pellets were then used to fabricate a molded article and various test specimens as by the method described above, and physical properties thereof were evaluated as described above. The results are shown in Table 2-3.

[Table 2-1]

| | | | Unit | Ex. 1 | Ex. 2 | Ex. 3 |
|---|---|---|---|---|---|---|
| Material composition of resin composition | 4-methyl-1-pentene· α-olefin copolymer (A) | | Parts by mass | 32 | 24 | 32 |
| | Inorganic filler (B) | (B-1) | Parts by mass | 48 | 36 | 48 |
| | | (B-2) | Parts by mass | - | - | - |
| | Olefinic thermoplastic elastomer (C1) | (C1-1) | Parts by mass | 20 | 40 | - |
| | | (C1-2) | Parts by mass | - | - | - |
| | | (C1-3) | Parts by mass | - | - | - |
| | Styrenic thermoplastic elastomer (C2) | (C2-1) | Parts by mass | - | - | 20 |
| | | (C2-2) | Parts by mass | - | - | - |
| | | (C2-3) | Parts by mass | - | - | - |
| | | (C2-4) | Parts by mass | - | - | - |
| | | (C2-5) | Parts by mass | - | - | - |
| | Propylene-based resin (E) | | Parts by mass | - | - | - |

(continued)

| | | | Unit | Ex. 1 | Ex. 2 | Ex. 3 |
|---|---|---|---|---|---|---|
| Physical properties of molded article | Dynamic viscoelasticity tanδ peak temperature | | °C | 29 | 28 | 30 |
| | Dynamic viscoelasticity tanδ peak value | | - | 1.16 | 0.68 | 1.81 |
| | Density | | g/cm³ | 1.26 | 1.17 | 1.28 |
| | Surface hardness (23°C) | Immediately after | Shore A | 99 | 96 | 93 |
| | | After 15 seconds | Shore A | 87 | 84 | 72 |
| | | ΔHS | - | 12 | 12 | 21 |
| | Mechanical properties | Tensile strength | MPa | 14.3 | 16.6 | 10.8 |
| | | Tensile elastic modulus | MPa | 126 | 55 | 42 |
| | | Tensile elongation | % | 186 | 305 | 155 |
| | Molding shrinkage ratio | | % | 2.4 | 1.9 | 2.5 |

(continued)

| | | | Unit | Ex. 4 | Ex. 5 | Ex. 6 | Ex. 7 |
|---|---|---|---|---|---|---|---|
| Material composition of resin composition | 4-methyl-1-pentene·α-olefin copolymer (A) | | Parts by mass | 32 | 24 | 30 | 50 |
| | Inorganic filler (B) | (B-1) | Parts by mass | 48 | 36 | 40 | 40 |
| | | (B-2) | Parts by mass | - | - | - | - |
| | Olefinic thermoplastic elastomer (C1) | (C1-1) | Parts by mass | - | - | - | - |
| | | (C1-2) | Parts by mass | - | - | - | - |
| | | (C1-3) | Parts by mass | - | - | - | - |
| | Styrenic thermoplastic elastomer (C2) | (C2-1) | Parts by mass | - | - | - | - |
| | | (C2-2) | Parts by mass | 20 | 40 | - | - |
| | | (C2-3) | Parts by mass | - | - | 30 | 10 |
| | | (C2-4) | Parts by mass | - | - | - | - |
| | | (C2-5) | Parts by mass | - | - | - | - |
| | Propylene-based resin (E) | | Parts by mass | - | - | - | - |

(continued)

|  |  |  | Unit | Ex. 4 | Ex. 5 | Ex. 6 | Ex. 7 |
|---|---|---|---|---|---|---|---|
| Physical properties of molded article | Dynamic viscoelasticity tan$\delta$ peak temperature | | °C | 22 | 17 | 17 | 24 |
| | Dynamic viscoelasticity tan$\delta$ peak value | | - | 1.76 | 1.02 | 1.39 | 2.19 |
| | Density | | g/cm$^3$ | 1.29 | 1.17 | 1.21 | 1.20 |
| | Surface hardness (23°C) | Immediately after | Shore A | 86 | 69 | 52 | 77 |
| | | After 15 seconds | Shore A | 64 | 51 | 36 | 44 |
| | | $\Delta$HS | - | 22 | 18 | 16 | 33 |
| | Mechanical properties | Tensile strength | MPa | 6.2 | 3.4 | 5.8 | 6.0 |
| | | Tensile elastic modulus | MPa | 8 | 4 | 3 | 4 |
| | | Tensile elongation | % | 221 | 228 | 430 | 322 |
| | Molding shrinkage ratio | | % | 2.6 | 1.6 | 1.8 | 3.1 |

[Table 2-2]

| | | | Unit | Ex. 8 | Ex. 9 | Ex. 10 |
|---|---|---|---|---|---|---|
| Material composition of resin composition | 4-methyl-1-pentene·α-olefin copolymer (A) | | Parts by mass | 30 | 40 | 40 |
| | Inorganic filler (B) | (B-1) | Parts by mass | 40 | 40 | 50 |
| | | (B-2) | Parts by mass | - | - | - |
| | Olefinic thermoplastic elastomer (C1) | (C1-1) | Parts by mass | - | - | - |
| | | (C1-2) | Parts by mass | - | - | - |
| | | (C1-3) | Parts by mass | - | - | - |
| | Styrenic thermoplastic elastomer (C2) | (C2-1) | Parts by mass | - | - | - |
| | | (C2-2) | Parts by mass | - | - | - |
| | | (C2-3) | Parts by mass | - | - | - |
| | | (C2-4) | Parts by mass | 30 | 20 | 10 |
| | | (C2-5) | Parts by mass | - | - | - |
| | Propylene-based resin (E) | | Parts by mass | - | - | - |

(continued)

| | | | Unit | Ex. 8 | Ex. 9 | Ex. 10 |
|---|---|---|---|---|---|---|
| Physical properties of molded article | Dynamic viscoelasticity tan$\delta$ peak temperature | | °C | 5 | 10 | 22 |
| | Dynamic viscoelasticity tan$\delta$ peak value | | - | 1.62 | 1.68 | 2.76 |
| | Density | | g/cm$^3$ | 1.21 | 1.19 | 1.17 |
| | Surface hardness (23°C) | Immediately after | Shore A | 25 | 30 | 40 |
| | | After 15 seconds | Shore A | 16 | 22 | 26 |
| | | $\Delta$HS | - | 9 | 8 | 14 |
| | Mechanical properties | Tensile strength | MPa | 1.5 | 3.3 | 4.0 |
| | | Tensile elastic modulus | MPa | 1 | 1 | 1 |
| | | Tensile elongation | % | 667 | 542 | 406 |
| | Molding shrinkage ratio | | % | 2.0 | 2.1 | 22 |

**EP 4 282 888 A1**

(continued)

| | | | Unit | Ex. 11 | Ex. 12 | Ex. 13 | Ex. 14 |
|---|---|---|---|---|---|---|---|
| Material composition of resin composition | 4-methyl-1-pentene·$\alpha$-olefin copolymer (A) | | Parts by mass | 40 | 40 | 50 | 30 |
| | Inorganic filler (B) | (B-1) | Parts by mass | 30 | - | 40 | 40 |
| | | (B-2) | Parts by mass | - | 30 | - | - |
| | Olefinic thermoplastic elastomer (C1) | (C1-1) | Parts by mass | - | - | - | - |
| | | (C1-2) | Parts by mass | - | - | 10 | 30 |
| | | (C1-3) | Parts by mass | - | - | - | - |
| | Styrenic thermoplastic elastomer (C2) | (C2-1) | Parts by mass | - | - | - | - |
| | | (C2-2) | Parts by mass | - | - | - | - |
| | | (C2-3) | Parts by mass | - | - | - | - |
| | | (C2-4) | Parts by mass | - | - | - | - |
| | | (C2-5) | Parts by mass | 30 | 30 | - | - |
| | Propylene-based resin (E) | | Parts by mass | - | - | - | - |

28

(continued)

|  |  |  | Unit | Ex. 11 | Ex. 12 | Ex. 13 | Ex. 14 |
|---|---|---|---|---|---|---|---|
| Physical properties of molded article | Dynamic viscoelasticity tan$\delta$ peak temperature | | °C | 28 | 29 | 28 | 21 |
| | Dynamic viscoelasticity tan$\delta$ peak value | | - | 1.85 | 1.78 | 2.46 | 1.75 |
| | Density | | g/cm$^3$ | 1.17 | 1.14 | 1.13 | 1.06 |
| | Surface hardness (23°C) | Immediately after | Shore A | 91 | 87 | 94 | 80 |
| | | After 15 seconds | Shore A | 69 | 64 | 74 | 55 |
| | | $\Delta$HS | - | 22 | 23 | 20 | 25 |
| | Mechanical properties | Tensile strength | MPa | 11.3 | 10.7 | 8.1 | 5.4 |
| | | Tensile elastic modulus | MPa | 148 | 67 | 457 | 9 |
| | | Tensile elongation | % | 236 | 244 | 231 | 294 |
| | Molding shrinkage ratio | | % | 1.8 | 1.6 | 2.3 | 2.3 |

[Table 2-3]

| | | | Unit | Ex. 15 | Ex. 16 |
|---|---|---|---|---|---|
| Material composition of resin composition | 4-methyl-1-pentene·α-olefin copolymer (A) | | Parts by mass | 50 | 30 |
| | Inorganic filler (B) | (B-1) | Parts by mass | 40 | 40 |
| | | (B-2) | Parts by mass | - | - |
| | Olefinic thermoplastic elastomer (C1) | (C1-1) | Parts by mass | - | - |
| | | (C1-2) | Parts by mass | - | - |
| | | (C1-3) | Parts by mass | 10 | 30 |
| | Styrenic thermoplastic elastomer (C2) | (C2-1) | Parts by mass | - | - |
| | | (C2-2) | Parts by mass | - | - |
| | | (C2-3) | Parts by mass | - | - |
| | | (C2-4) | Parts by mass | - | - |
| | | (C2-5) | Parts by mass | - | - |
| | Propylene-based resin (E) | | Parts by mass | - | - |

(continued)

| | | | Unit | Ex. 15 | Ex. 16 |
|---|---|---|---|---|---|
| Physical properties of molded article | Dynamic viscoelasticity tanδ peak temperature | | °C | 29 | 28 |
| | Dynamic viscoelasticity tanδ peak value | | - | 1.90 | 1.21 |
| | Density | | g/cm³ | 1.12 | 1.08 |
| | Surface hardness (23°C) | Immediately after | Shore A | 97 | 95 |
| | | After 15 seconds | Shore A | 85 | 83 |
| | | ΔHS | - | 12 | 12 |
| | Mechanical properties | Tensile strength | MPa | 12.5 | 11.6 |
| | | Tensile elastic modulus | MPa | 400 | 193 |
| | | Tensile elongation | % | 202 | 204 |
| | Molding shrinkage ratio | | % | 2.3 | 2.1 |

(continued)

| | | Unit | Comp. Ex. 1 | Comp. Ex. 2 | Comp. Ex. 3 | Comp. Ex. 4 |
|---|---|---|---|---|---|---|
| Material composition of resin composition | 4-methyl-1-pentene·α-olefin copolymer (A) | Parts by mass | 100 | 30 | 40 | 30 |
| | Inorganic filler (B) (B-1) | Parts by mass | - | 70 | - | - |
| | Inorganic filler (B) (B-2) | Parts by mass | - | - | - | 70 |
| | Olefinic thermoplastic elastomer (C1) (C1-1) | Parts by mass | - | - | - | - |
| | (C1-2) | Parts by mass | - | - | - | - |
| | (C1-3) | Parts by mass | - | - | - | - |
| | Styrenic thermoplastic elastomer (C2) (C2-1) | Parts by mass | - | - | - | - |
| | (C2-2) | Parts by mass | - | - | - | - |
| | (C2-3) | Parts by mass | - | - | - | - |
| | (C2-4) | Parts by mass | - | - | - | - |
| | (C2-5) | Parts by mass | - | - | - | - |
| | Propylene-based resin (E) | Parts by mass | - | - | 60 | - |

(continued)

| | | Unit | Comp. Ex. 1 | Comp. Ex. 2 | Comp. Ex. 3 | Comp. Ex. 4 |
|---|---|---|---|---|---|---|
| Physical properties of molded article | Dynamic viscoelasticity tanδ peak temperature | °C | 30 | 32 | 23 | 31 |
| | Dynamic viscoelasticity tanδ peak value | - | 2.70 | 2.04 | 0.25 | 2.01 |
| | Density | g/cm³ | 0.84 | 1.46 | 0.88 | 1.84 |
| | Surface hardness (23°C) — Immediately after | Shore A | 90 | 99 | 99 | 97 |
| | Surface hardness (23°C) — After 15 seconds | Shore A | 70 | 99 | 98 | 90 |
| | Surface hardness (23°C) — ΔHS | - | 20 | 0 | 1 | 7 |
| | Mechanical properties — Tensile strength | MPa | 13.6 | 11.7 | 26.4 | 97 |
| | Mechanical properties — Tensile elastic modulus | MPa | 184 | 1490 | 987 | 1158 |
| | Mechanical properties — Tensile elongation | % | 394 | 129 | 232 | 116 |
| | Molding shrinkage ratio | % | 6.4 | 3.3 | 2.6 | 3.2 |

As shown in Tables 2-1 to 2-3, the molded articles comprising the resin compositions obtained in Examples 1 to 16 exhibit the tanδ peak temperature of 0°C or more and 60°C or less, and the tan5 peak value of 0.6 or more and 5.0 or less, as measured by dynamic viscoelasticity (in the temperature range of -40 to 150°C) at a frequency of 10 rad/s (1.6 Hz), thereby resulting in excellent stress relaxation in the room temperature range, and they slowly recover their original shapes after having been elastically deformed. Moreover, each density is from 1.0 g/cm³ or more and 5.0 g/cm³ or less, rendering a molded article with a sense of massiveness. Furthermore, according to the measurement of surface hardness, the displacement between the hardness immediately after the measurement and the hardness 15 seconds thereafter was large, from which it can be said that the molded article can feel soft touch.

Industrial Applicability

The resin compositions and molded articles of the present invention can be suitably used for daily necessities, toys, and earpiece components. Examples of daily necessities comprising the resin composition of the present invention include containers for food and the like, tableware such as forks and spoons (particularly, handles and grips of forks and spoons), and plates, and containers such as containers with lids and cosmetic compacts. Examples of toys include models such as plastic models. Examples of earpiece components include components for hearing aid and earphone components. Other examples include heat-dissipation materials.

**Claims**

1. A resin composition, comprising

   15 to 50 parts by mass of a 4-methyl-1-pentene/α-olefin copolymer (A) satisfying at least one of the following requirement (d) and requirement (e),
   10 to 50 parts by mass of an inorganic filler (B), and
   5 to 49 parts by mass of a thermoplastic elastomer (C),
   wherein a total amount of 4-methyl-1-pentene/α-olefin copolymer (A), inorganic filler (B), and thermoplastic elastomer (C) is 100 parts by mass,
   wherein the thermoplastic elastomer (C) is at least one selected from the group consisting of an olefinic thermoplastic elastomer (C1) and a styrenic thermoplastic elastomer (C2), and
wherein the resin composition satisfies the following requirements (a) to (c):

    (a) having a temperature at which a value of loss tangent tan5 as determined by dynamic viscoelasticity measurement at a frequency of 10 rad/s (1.6 Hz) in a temperature range of -40 to 150°C reaches the maximum (hereinafter also referred to as a tan5 peak temperature) being 0°C or more and 60°C or less;
    (b) having a maximum value of loss tangent $\tan\delta$ (hereinafter also referred to as a $\tan\delta$ peak value) as determined by dynamic viscoelasticity measurement at a frequency of 10 rad/s (1.6 Hz) in a temperature range of -40 to 150°C being 0.6 or more and 5.0 or less;
    (c) having a density of 1.0 g/cm$^3$ or more and 5.0 g/cm$^3$ or less;
    (d) comprising 55 to 90 mol% of a constituent unit derived from 4-methyl-1-pentene and 10 to 45 mol% of a constituent unit derived from $\alpha$-olefin having 2 to 4 carbon atoms, wherein a total of the constituent unit derived from 4-methyl-1-pentene and the constituent unit derived from $\alpha$-olefin having 2 to 4 carbon atoms is 100 mol%; and
    (e) having a melting point as measured by a differential scanning calorimeter (DSC) being 160°C or less, or having no observed melting point.

2.   The resin composition according to claim 1, wherein the 4-methyl-1-pentene/$\alpha$-olefin copolymer (A) satisfies the following requirements (f) and (g):

    (f) having a $\tan\delta$ peak temperature of 15°C or more and 45°C or less, as determined by dynamic viscoelasticity measurement with a frequency of 10 rad/s (1.6 Hz) in a temperature range of -40 to 150°C; and
    (g) having a $\tan\delta$ peak value of 0.6 or more and 5.0 or less, as determined by dynamic viscoelasticity measurement at a frequency of 10 rad/s (1.6 Hz) in a temperature range of - 40 to 150°C.

3.   The resin composition according to claim 1 or 2, wherein the inorganic filler (B) is one or more selected from the group consisting of calcium carbonate, magnesium sulfate, barium sulfate, magnesium oxide, and talc.

4.   The resin composition according to any one of claims 1 to 3, wherein an average particle size of the inorganic filler (B) is from 0.01 to 100 $\mu$m.

5.   A molded article comprising the resin composition according to any one of claims 1 to 4.

6.   Daily necessities comprising the resin composition according to any one of claims 1 to 4.

7.   A toy comprising the resin composition according to any one of claims 1 to 4.

8.   An earpiece component comprising the resin composition according to any one of claims 1 to 4.

9.   A sheet comprising the resin composition according to any one of claims 1 to 4.

## INTERNATIONAL SEARCH REPORT

| International application No. |
|---|
| **PCT/JP2022/001920** |

| A. | CLASSIFICATION OF SUBJECT MATTER |
|---|---|

*C08F 210/14*(2006.01)i; *C08L 23/16*(2006.01)i; *C08L 23/20*(2006.01)i; *C08L 53/02*(2006.01)i; *C08K 3/013*(2018.01)i; *C08K 3/22*(2006.01)i; *C08K 3/26*(2006.01)i; *C08K 3/30*(2006.01)i; *C08K 3/34*(2006.01)i
FI: C08L23/20; C08K3/013; C08L23/16; C08L53/02; C08K3/26; C08K3/30; C08K3/22; C08K3/34; C08F210/14

According to International Patent Classification (IPC) or to both national classification and IPC

| B. | FIELDS SEARCHED |
|---|---|

Minimum documentation searched (classification system followed by classification symbols)

C08K3/00-13/08; C08L1/00-101/14; C08F6/00-246/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2016/143599 A1 (MITSUI CHEMICALS, INC.) 15 September 2016 (2016-09-15) claims 1-12, paragraphs [0002], [0012], [0065], [0091], [0092], examples 3, 9, 11, 13, 14, 16, tables 1, 2 | 1-7, 9 |
| A | | 8 |
| X | JP 2020-075947 A (MITSUI CHEMICALS, INC.) 21 May 2020 (2020-05-21) claims 1-12, paragraphs [0006], [0056]-[0059], [0078], examples, table 1 | 1-5, 9 |
| A | | 6-8 |
| A | JP 2018-135415 A (MCPP INNOVATION LLC) 30 August 2018 (2018-08-30) claims 1-8, paragraphs [0007], [0062]-[0064], [0085]-[0087], [0140], examples | 1-9 |
| A | JP 2019-130707 A (MITSUI CHEMICALS, INC.) 08 August 2019 (2019-08-08) claims 1-10, paragraphs [0006], [0045]-[0049], [0076], examples, table 1 | 1-9 |
| A | JP 2019-033798 A (MITSUI CHEMICALS, INC.) 07 March 2019 (2019-03-07) claims 1-5, paragraphs [0047]-[0060], examples | 1-9 |

☑ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 February 2022** | **29 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**EP 4 282 888 A1**

| INTERNATIONAL SEARCH REPORT | International application No. |
| --- | --- |
| | **PCT/JP2022/001920** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 2019-125922 A (MITSUI CHEMICALS, INC.) 25 July 2019 (2019-07-25) claims 1-12, paragraphs [0042]-[0055] | 1-9 |
| P, A | WO 2021/095683 A1 (MITSUI CHEMICALS, INC.) 20 May 2021 (2021-05-20) claims 1-10, paragraphs [0008], [0072]-[0074], examples | 1-9 |

Form PCT/ISA/210 (second sheet) (January 2015)

36

**INTERNATIONAL SEARCH REPORT**
Information on patent family members

International application No.

**PCT/JP2022/001920**

| Patent document cited in search report | | | Publication date (day/month/year) | Patent family member(s) | | | Publication date (day/month/year) |
|---|---|---|---|---|---|---|---|
| WO | 2016/143599 | A1 | 15 September 2016 | US 2019/0211193 A1 claims 1-33, paragraphs [0002], [0015], [0112], [0172]-[0178], examples 3, 9, 11, 13, 14, 16, tables 1, 2 EP 3266822 A1 CN 107250247 A KR 10-2017-0117500 A TW 201641564 A | | | |
| JP | 2020-075947 | A | 21 May 2020 | (Family: none) | | | |
| JP | 2018-135415 | A | 30 August 2018 | (Family: none) | | | |
| JP | 2019-130707 | A | 08 August 2019 | (Family: none) | | | |
| JP | 2019-033798 | A | 07 March 2019 | (Family: none) | | | |
| JP | 2019-125922 | A | 25 July 2019 | (Family: none) | | | |
| WO | 2021/095683 | A1 | 20 May 2021 | TW 202124560 A claims 1-10, paragraphs [0008], [0072]-[0074], examples | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001071378 A
- JP 2003026866 A
- WO 2018092494 A
- WO 0153369 A
- WO 0127124 A
- JP H3193796 A
- JP H241303 A
- WO 2011055803 A
- WO 2014050817 A